(19) Europäisches Patentamt European Patent Office Office européen des brevets

(11) **EP 4 561 085 A1**

(12) **EUROPEAN PATENT APPLICATION**
published in accordance with Art. 153(4) EPC

(43) Date of publication:
**28.05.2025 Bulletin 2025/22**

(21) Application number: 23842845.2

(22) Date of filing: **07.07.2023**

(51) International Patent Classification (IPC):
**H04N 23/60** (2023.01)    **H04B 10/67** (2013.01)
**H04N 25/707** (2023.01)

(52) Cooperative Patent Classification (CPC):
**H04B 10/67; H04N 23/60; H04N 25/707**

(86) International application number:
**PCT/JP2023/025225**

(87) International publication number:
**WO 2024/018920 (25.01.2024 Gazette 2024/04)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority:  **21.07.2022   JP 2022116667**

(71) Applicant: **Sony Semiconductor Solutions Corporation**
**Atsugi-shi, Kanagawa 243-0014 (JP)**

(72) Inventors:
• **DAVAAJAV Ganbold**
  **Atsugi-shi, Kanagawa 243-0014 (JP)**
• **HONDA Motonari**
  **Atsugi-shi, Kanagawa 243-0014 (JP)**

(74) Representative: **MFG Patentanwälte**
**Meyer-Wildhagen Meggle-Freund**
**Gerhard PartG mbB**
**Amalienstraße 62**
**80799 München (DE)**

(54)    **INFORMATION PROCESSING DEVICE AND INFORMATION PROCESSING METHOD**

(57)    [Problem] Even when a positional relationship between a light source and a photoelectric conversion element dynamically changes, information from the light source is correctly extracted.

[Solution] An information processing device includes: a plurality of photoelectric conversion elements that each photoelectrically convert incident light and generate an electrical signal; an event detection unit that detects an event that occurs based on a change amount of the electrical signal of each of the plurality of photoelectric conversion elements; an event group extraction unit that extracts an event group including a plurality of the temporally and spatially close events based on the event detected within a predetermined time range; and a representative event extraction unit that extracts a representative event representing the plurality of events included in the event group.

Fig. 7

## Description

[Technical Field]

The present disclosure relates to an information processing device and an information processing method.

[Background Art]

There has been proposed an Event-based Vision Sensor (EVS) that acquires, at a high speed, event information of a photoelectric conversion element in which some event such as brightness change has occurred in an imaging scene. This EVS performs an operation of detecting brightness change of light as an event. The EVS has characteristics that the EVS can capture a change of a state of a subject at a high speed. There has been proposed as a method for appropriating these characteristics, analyzing a frequency pattern of the artificial light source, and acquiring information from an artificial light source (e.g., PTL 1).

[Citation List]

[Patent Literature]

[PTL 1]

Japanese Translation of PCT Application No. 2021-513235

[Summary]

[Technical Problem]

The method disclosed in PTL 1 assumes that the same photoelectric conversion element receives light from the artificial light source. Hence, when, for example, a light source moves at a high speed or when the EVS moves at a high speed, there is a probability that information transmitted from the artificial light source cannot be correctly extracted.

The present technique has been invented with such a situation in view, and provides an information processing device and an information processing method that can correctly extract information from a light source even when a positional relationship between the light source and a photoelectric conversion element dynamically changes.

[Solution to Problem]

To solve the above problem, the present disclosure provides an information processing device that includes: a plurality of photoelectric conversion elements that each photoelectrically convert incident light and generate an electrical signal; an event detection unit that detects an event that occurs based on a change amount of the electrical signal of each of the plurality of photoelectric conversion elements; an event group extraction unit that extracts an event group including a plurality of temporally and spatially close events based on the event detected within a predetermined time range; and a representative event extraction unit that extracts a representative event representing the plurality of events included in the event group.

The plurality of photoelectric conversion elements may be able to receive the incident light including information, and the information processing device may further include an information processing unit that decodes the information based on the representative event.

The information processing device may further include a time difference detection unit that detects a time difference between a new representative event extracted by the representative event extraction unit, and an other representative event that is close to the new representative event and has already been extracted, and the information processing unit may decode the information based on the time difference.

The event detection unit may detect position information of the event and information of a time at which the event has occurred, and the time difference detection unit may detect the time difference from an other representative event that is temporally or spatially the closest to the new representative event among a plurality of the other representative events.

The representative event extraction unit may extract position information of the representative event, information of a time at which the representative event has occurred, and range information of the event group to which the representative event belongs, and the other representative event may include time information different from a time range included in the range information of the new representative event.

The other representative event may include information of a position within a position range included in the range information of the new representative event.

The event detection unit may detect position information of the event, information of a time at which the event has occurred, and polarity information indicating a change direction of the change amount of the electrical signal, and the time difference detection unit may detect the time difference from an other representative event that includes polarity information different from polarity information of the new representative event and is temporally or spatially the closest to the new representative event among a plurality of the other representative events.

The representative event extraction unit may extract position information of the representative event, information of a time at which the representative event has occurred, polarity information of the representative event, and range information of the event group to which the representative event belongs, and the other representative event may include time information different from a time range included in the range information of the new representative event.

The other representative event may include information of a position within a position range included in the range information of the new representative event.

The information processing unit may generate decoded data including a plurality of bits included in the information based on a plurality of the time differences repeatedly detected by the time difference detection unit, and output the decoded data and output data including timing information and position information of the representative event.

The information processing unit may determine whether the time difference indicates start bit information or indicates a specific bit value of the decoded data based on a time length of the time difference.

The information processing device may further include a first storage unit that stores information related to the representative event extracted by the representative event extraction unit, and the information processing unit may add information to the first storage unit or update the information stored in the first storage unit every time the representative event extraction unit newly extracts a representative event.

The information processing device may further include a first storage unit that stores first data including position information of the representative event, timing information, bit count information of the decoded data, and the decoded data per representative event extracted by the representative event extraction unit, the time difference detection unit reads from the first storage unit the first data of the new representative event and the first data of the other representative event, and detects the time difference, and the information processing unit may add the first data to the first storage unit or updates the first data stored in the first storage unit every time the representative event extraction unit newly extracts a representative event.

The first data may include polarity information.

The information processing device may further include a second storage unit that stores second data related to an occurrence time of the event in chronological order, and the event group extraction unit may extract the event group based on the second data having occurred within the predetermined time range among items of the second data stored in the second storage unit.

The second data may include information of a time and information of a position at which the event that has occurred.

The representative event extraction unit may delete the second data that has been stored for a longest time among a plurality of items of the second data stored in the second storage unit every time the representative event is extracted.

The information processing device may further include a third storage unit that associates third data related to the event with a spatial position at which the event has been detected to store, and the representative event extraction unit may extract the representative event based on the third data stored in the third storage unit.

The information processing device may further include a third storage unit that associates third data related to the event with a spatial position at which the event has been detected to store, and the representative event extraction unit may extract the representative event based on the third data stored in the third storage unit, and the third data may include at least one of address information of the second data, polarity information indicating a plus or minus sign of the change amount of the electrical signal of the event, and information of a timing at which the event has occurred.

Furthermore, the present disclosure provides an information processing method, a plurality of photoelectric conversion elements that each photoelectrically convert incident light and generate an electrical signal can receive the incident light including information, and the information processing method includes at the plurality of photoelectric conversion elements: detecting an event that has occurred based on the electrical signal; extracting an event group including a plurality of temporally and spatially close events based on the event detected within the predetermined time range; extracting a representative event representing the plurality of events included in the event group; and decoding the information based on the representative event.

[Brief Description of Drawings]

[Fig. 1]

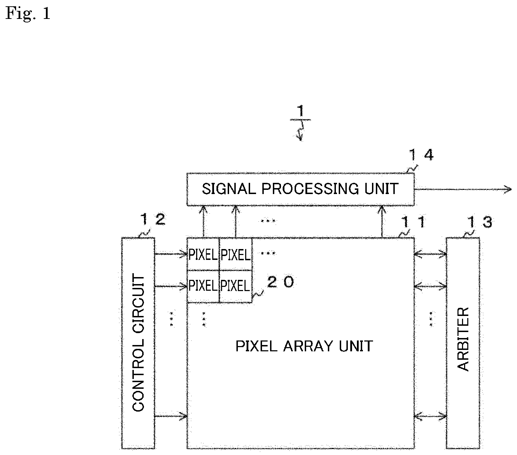

Fig. 1 is a block diagram illustrating a configuration example of an information processing device according to the present disclosure.
[Fig. 2]

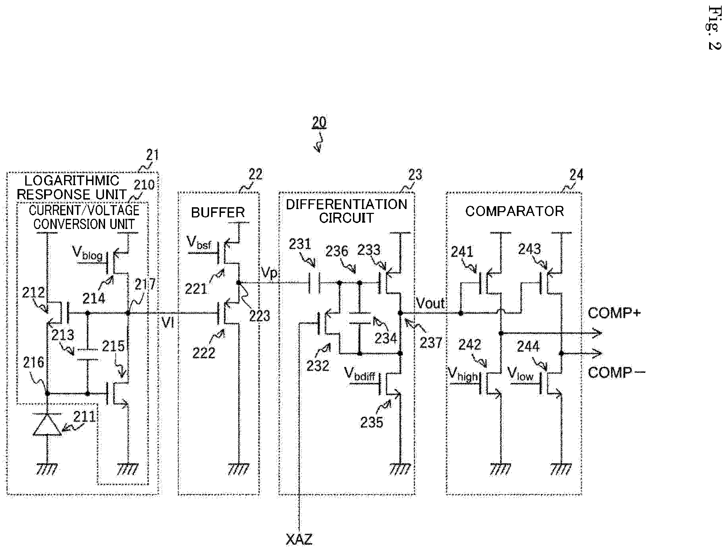

Fig. 2 is a circuit diagram illustrating an example of a pixel.
[Fig. 3]

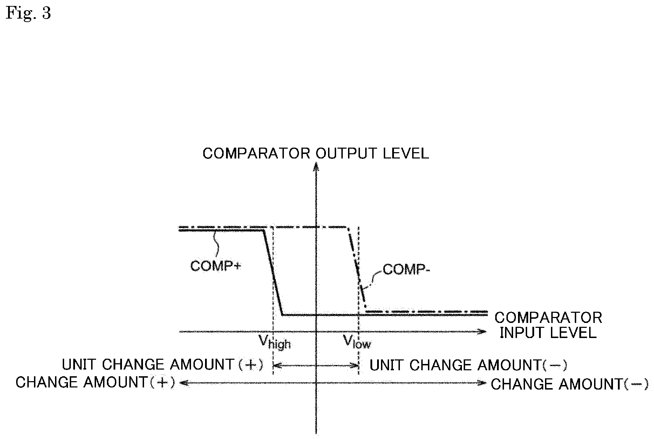

Fig. 3 is a graph showing an example of input/output characteristics of a comparator according to the present disclosure.
[Fig. 4]

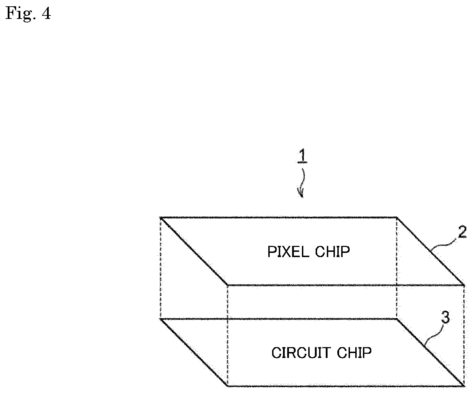

Fig. 4 is a schematic view illustrating a laminated structure of the information processing device according to the present disclosure.
[Fig. 5]

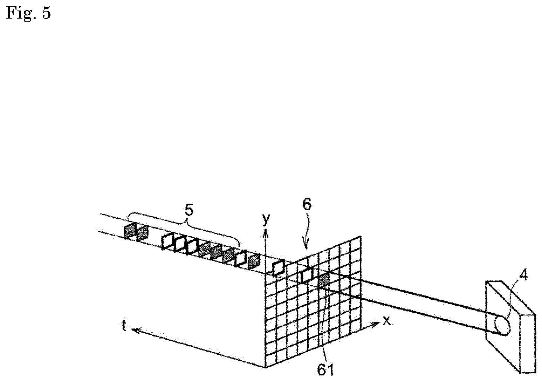

Fig. 5 is a schematic view for describing a method for receiving light emitted by a light source of a fixed position, and analyzing information included in the received light.
[Fig. 6]

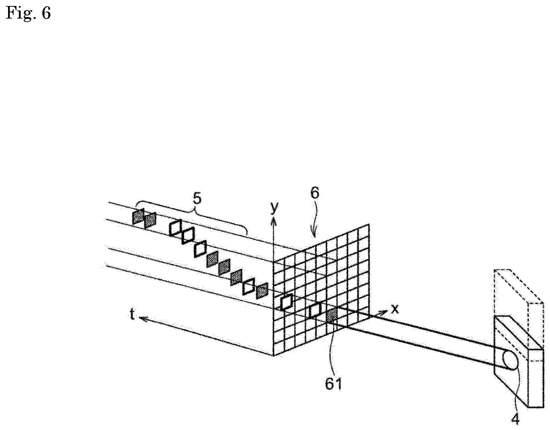

Fig. 6 is a schematic view for describing a method for analyzing information included in light from an active light source.
[Fig. 7]

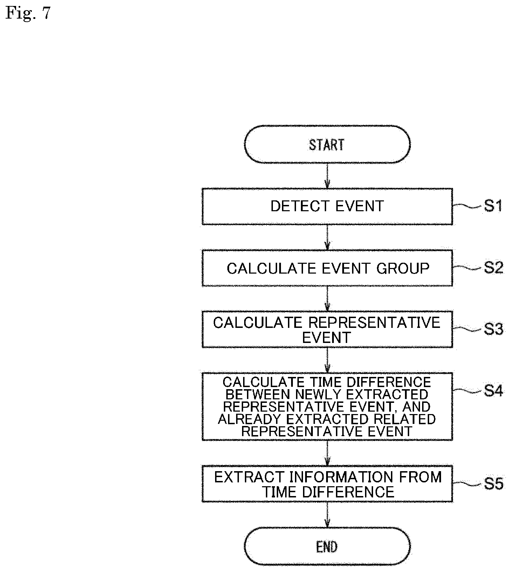

Fig. 7 is a flowchart illustrating a schematic processing operation of the information processing device according to a first embodiment of the present disclosure.

[Fig. 8]

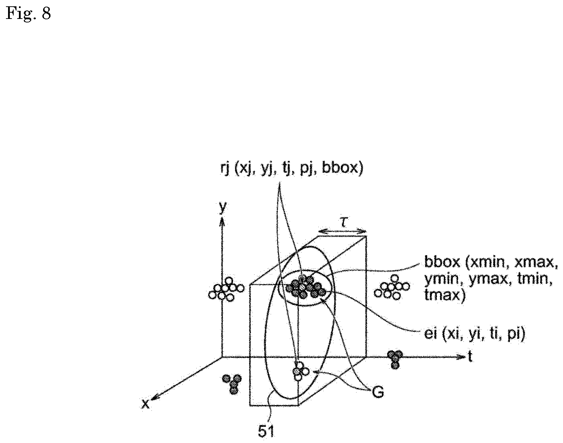

Fig. 8 is a conceptual view of an event group and a representative event.

[Fig. 9A]

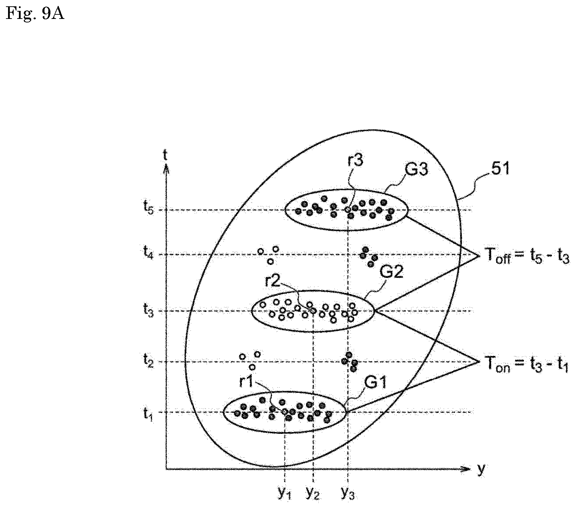

Fig. 9A is a view illustrating an example where a position of an event group having occurred within a predetermined time range moves as a time passes.

[Fig. 9B]

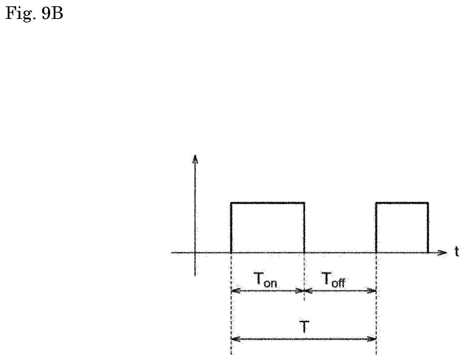

Fig. 9B is a view illustrating an example where 1-bit information is transmitted from the light source per time interval.

[Fig. 10]

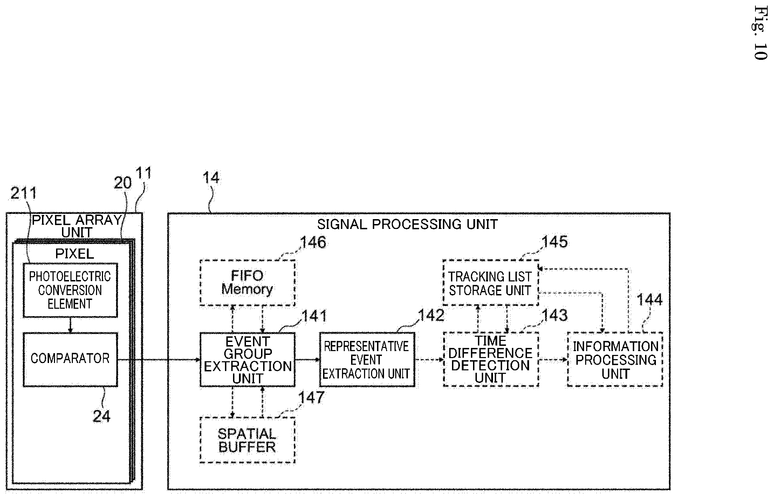

Fig. 10 is a block diagram illustrating a configuration example of a signal processing unit according to the first embodiment of the present technique.

[Fig. 11]

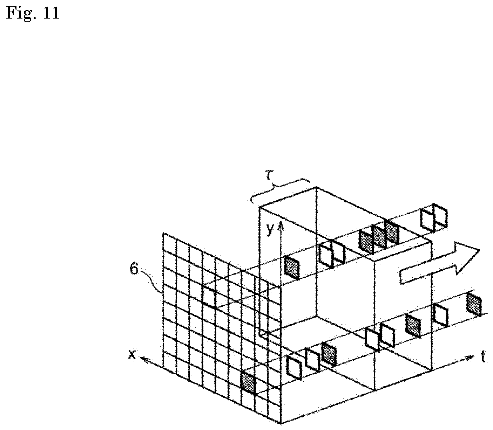

Fig. 11 is a view for schematically describing the method for analyzing the information included in the light from the light source according to the first embodiment of the present disclosure.

[Fig. 12]

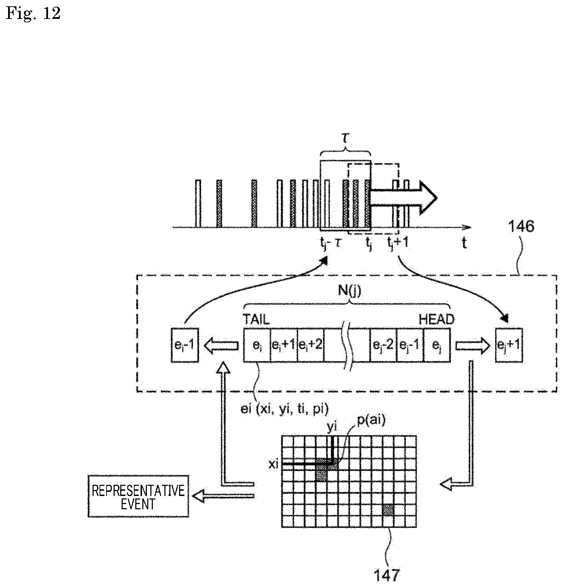

Fig. 12 is a view illustrating a relationship between an event having occurred in a pixel, data stored in a FIFO memory and a spatial buffer, and representative data to be extracted.

[Fig. 13A]

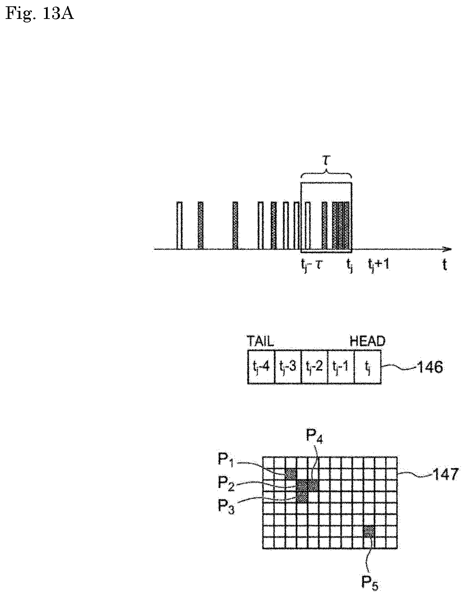

Fig. 13A is a view illustrating initial states of the FIFO memory and the spatial buffer before PUSH and POP are performed in the FIFO memory.

[Fig. 13B]

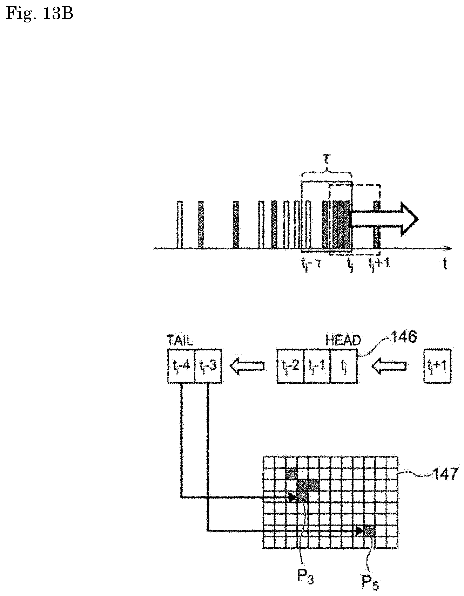

Fig. 13B is a view illustrating the FIFO memory and the spatial buffer at a time of occurrence of a new event.

[Fig. 13C]

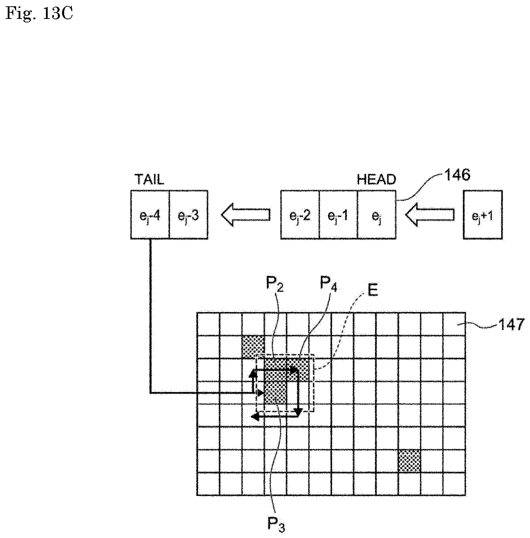

Fig. 13C is a view illustrating search for an event near a first event in the spatial buffer.

[Fig. 13D]

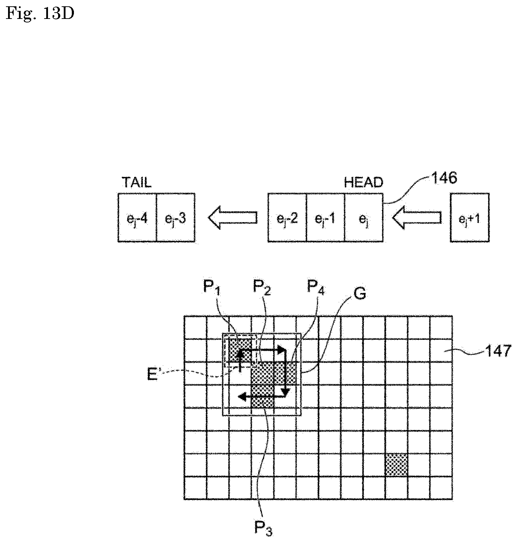

Fig. 13D is a view illustrating extraction of an event group of the first event in the spatial buffer.

[Fig. 13E]

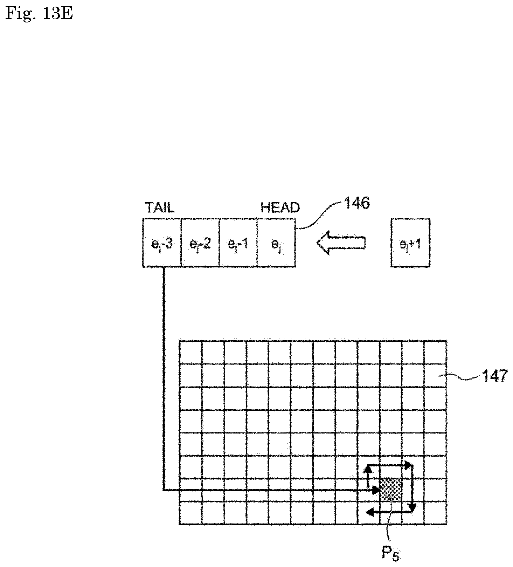

Fig. 13E is a view illustrating search for an event near a second event in the FIFO memory and the spatial buffer.

[Fig. 13F]

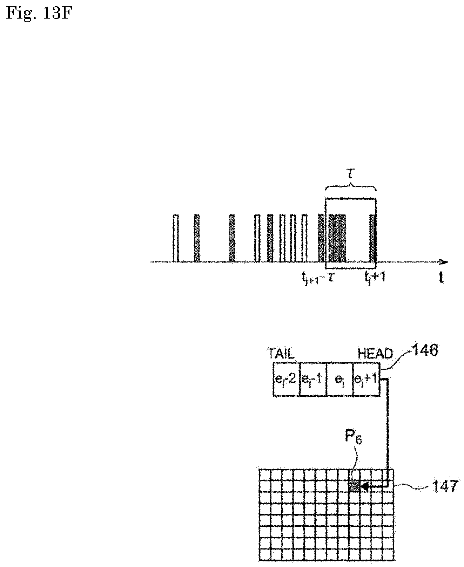

Fig. 13F is a view illustrating that a new event is registered in the FIFO memory and the spatial buffer.

[Fig. 14A]

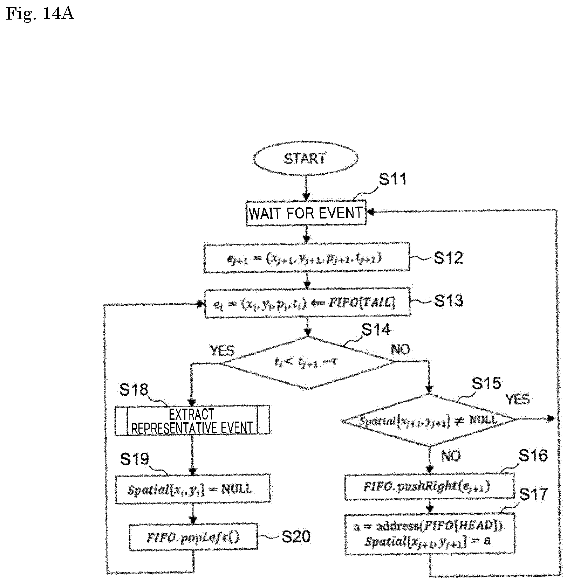

Fig. 14A is a flowchart illustrating a processing operation of an event group extraction unit according to the first embodiment of the present disclosure.

[Fig. 14B]

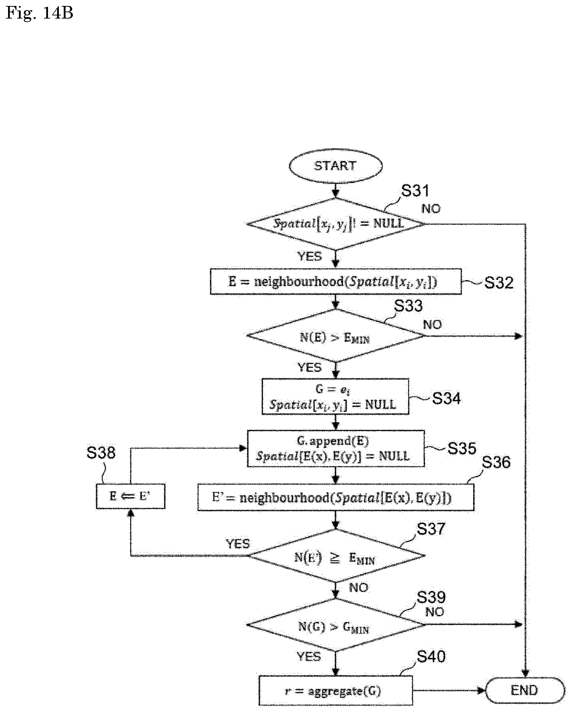

Fig. 14B is a flowchart illustrating a detailed processing operation of representative event extraction processing according to the first embodiment of the present disclosure.

[Fig. 15]

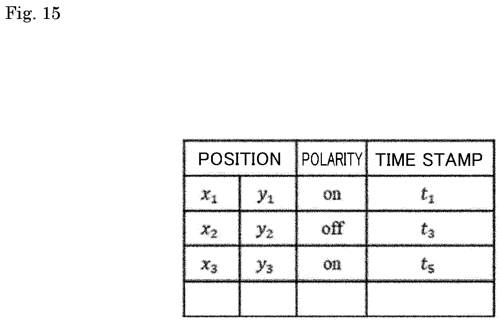

Fig. 15 is a view illustrating an example of data stored in the FIFO memory.

[Fig. 16]

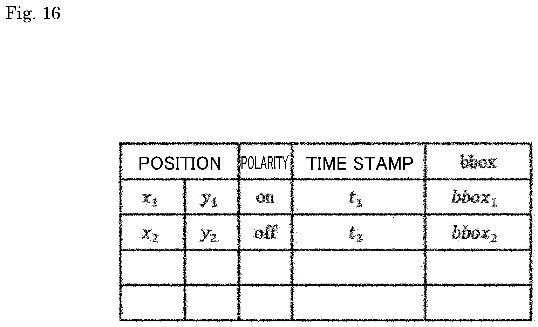

Fig. 16 is a view illustrating an example of a data configuration of a representative event extracted by the representative event extraction unit.

[Fig. 17]

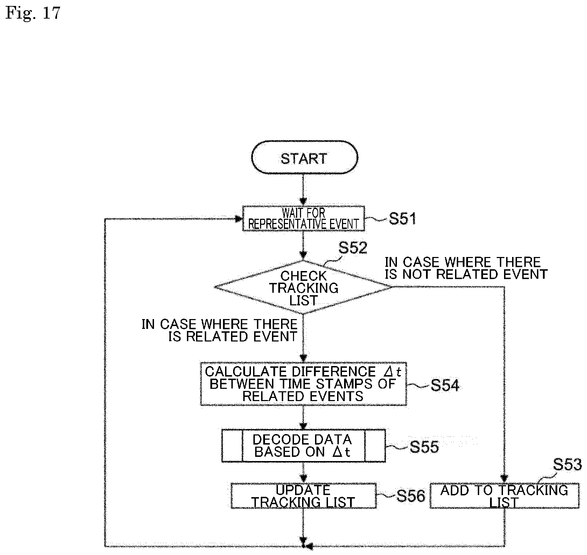

Fig. 17 is a flowchart illustrating a processing operation of a time difference detection unit.

[Fig. 18]

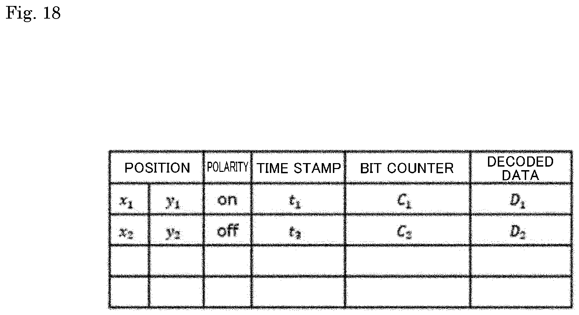

Fig. 18 is a view illustrating a configuration example of a tracking list.

[Fig. 19]

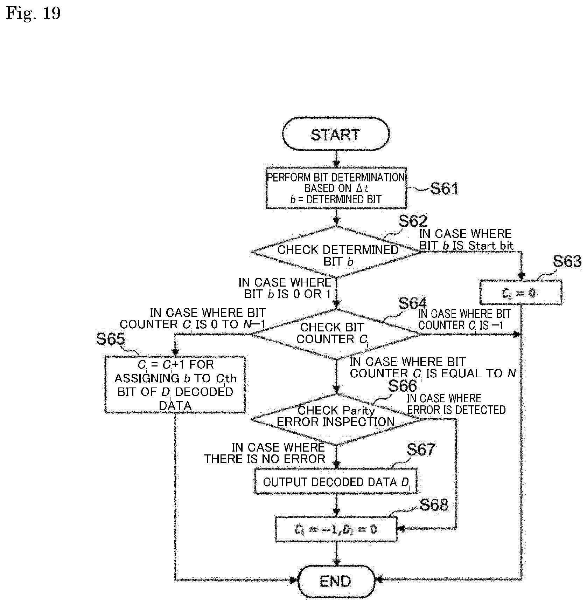

Fig. 19 is a flowchart illustrating a processing operation of an information processing unit.

[Fig. 20]

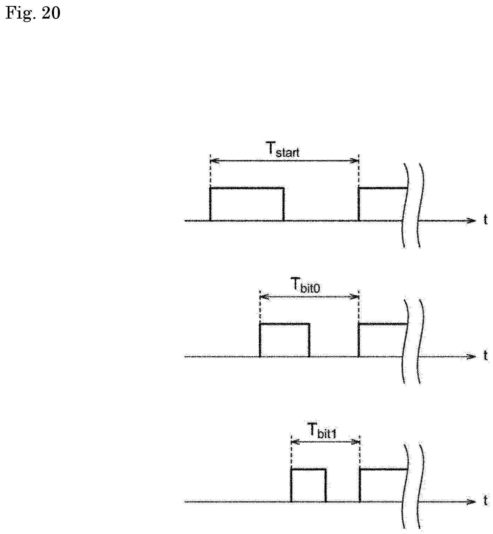

Fig. 20 is a view illustrating an example of bit determination of the time difference detection unit.

[Fig. 21]

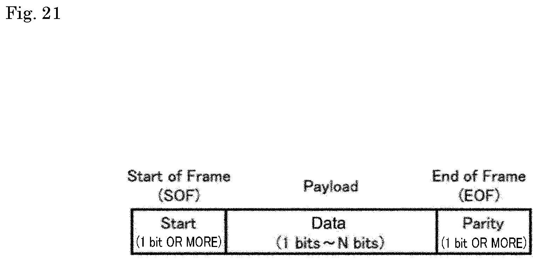

Fig. 21 illustrates a format of bit sequence data transmitted from the light source.

[Fig. 22]

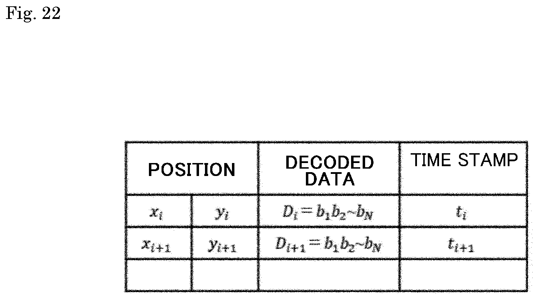

Fig. 22 is a view illustrating an example of an output format of information output by the signal processing unit.

[Fig. 23]

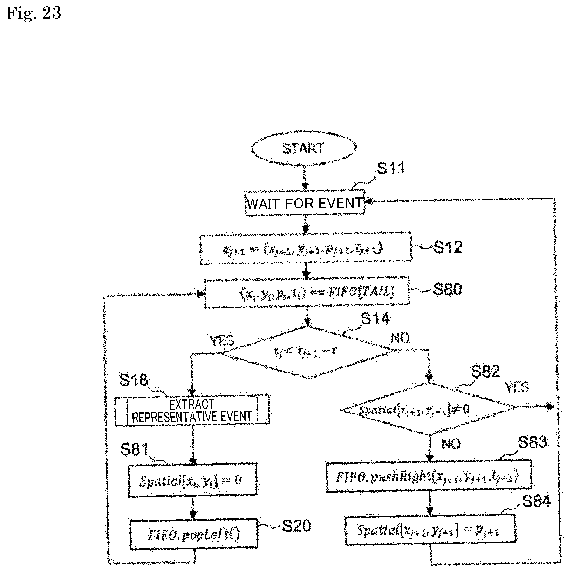

Fig. 23 is a flowchart illustrating a processing operation of the information processing device according to a second embodiment of the present disclosure.

[Fig. 24]

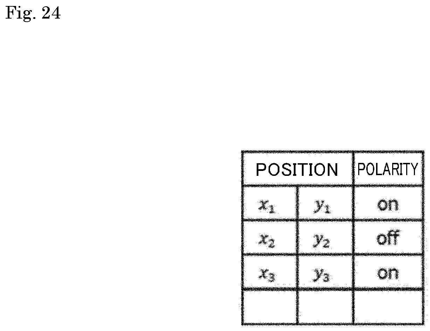

Fig. 24 illustrates an example of data that can be acquired from the spatial buffer according to the second embodiment of the present disclosure.

[Fig. 25]

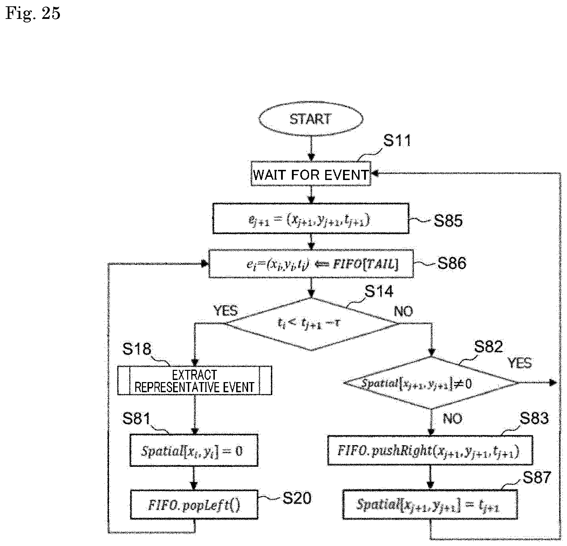

Fig. 25 is a flowchart illustrating a processing operation of the information processing device according to a third embodiment of the present disclosure.

[Fig. 26]

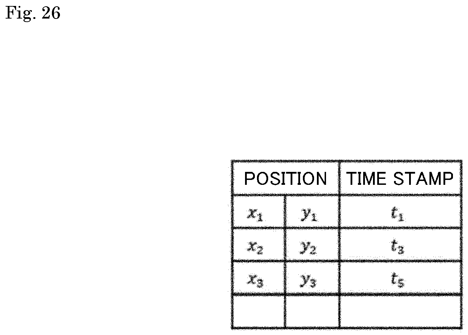

Fig. 26 illustrates an example of data that can be acquired from the spatial buffer according to the third embodiment of the present disclosure.

[Fig. 27]

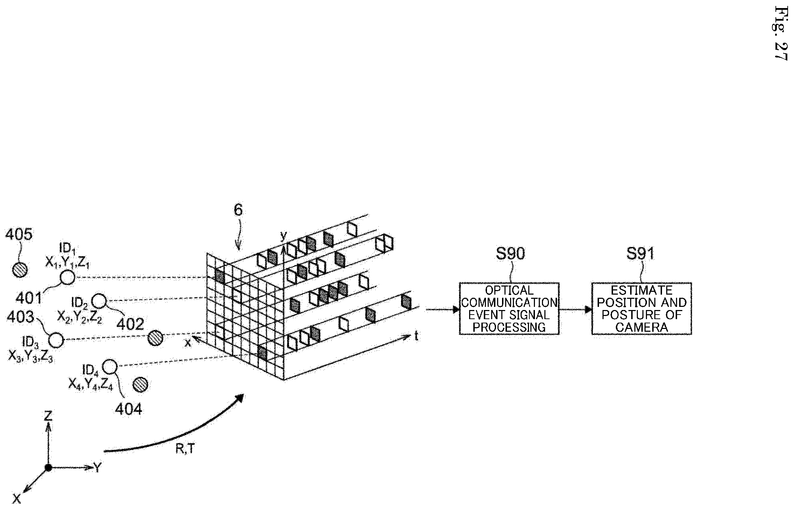

Fig. 27 is a view illustrating an example of an own position estimation method that uses the information processing device according to the present disclosure according to an application example 1 of the present disclosure.

[Fig. 28]

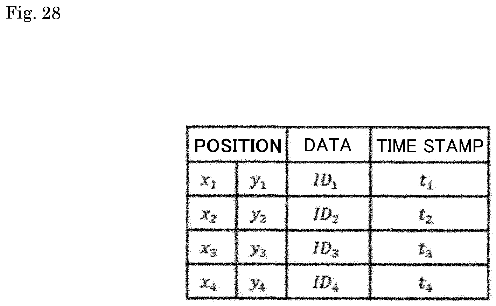

Fig. 28 is a view illustrating an example of a decoding result according to the application example 1 of the present disclosure.

[Fig. 29]

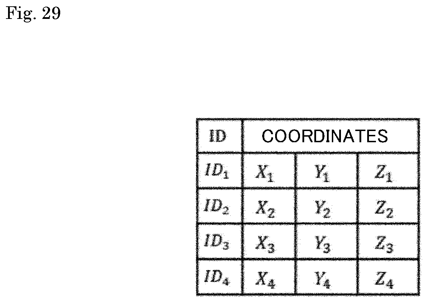

Fig. 29 is a view illustrating an example of a table for storing position information of the light source according to the application example 1 of the present disclosure.

[Fig. 30]

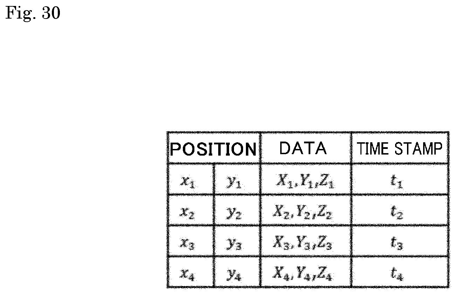

Fig. 30 is a view illustrating an example of a decoding result output by the information processing device when the light source transmits own coordinates.
[Fig. 31]

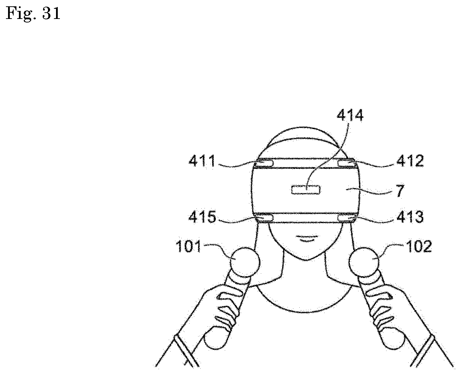

Fig. 31 is a view illustrating an example of a VR system including a display device and the information processing device according to an application example 2 of the present disclosure.
[Fig. 32]

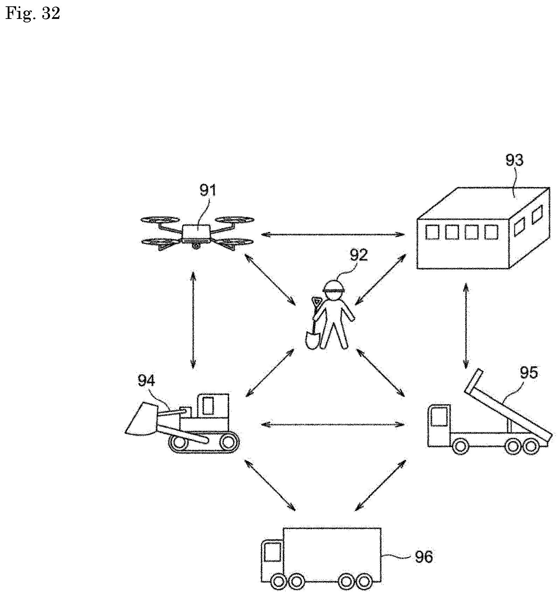

Fig. 32 is a view illustrating an example of a construction site according to an application example 3 of the present disclosure.
[Fig. 33]

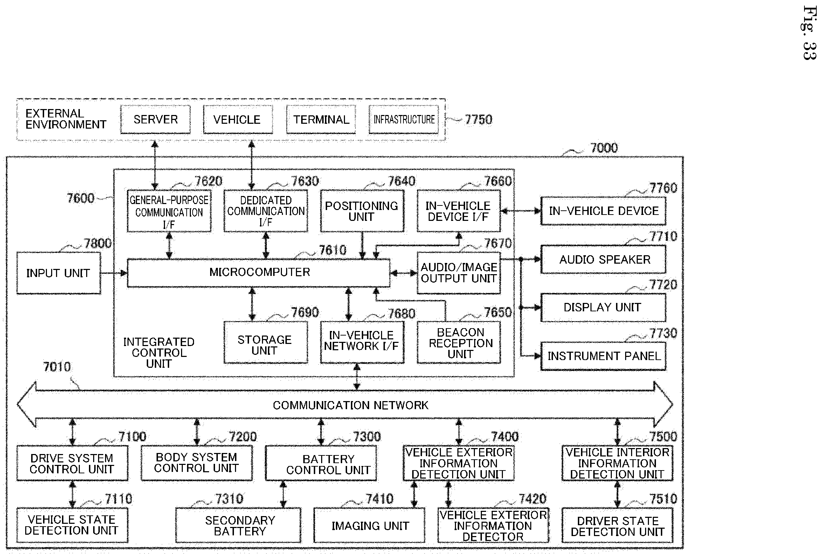

Fig. 33 is a block diagram illustrating an example of a schematic configuration of a vehicle control system.
[Fig. 34]

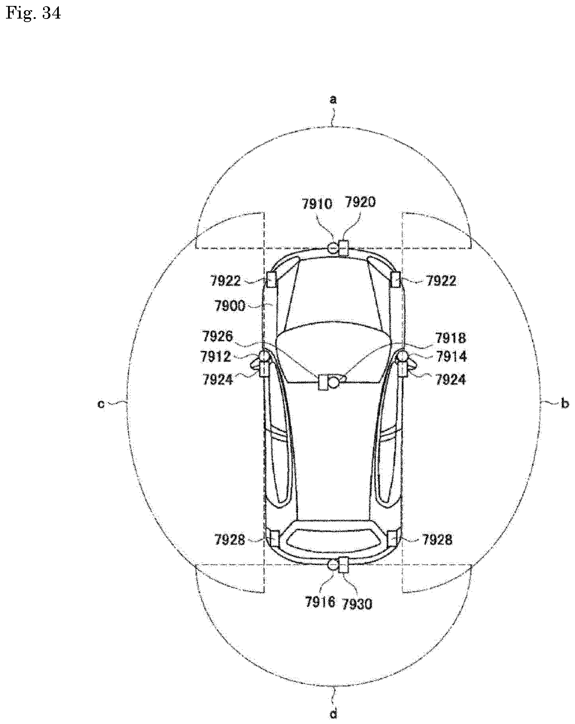

Fig. 34 is an explanatory diagram illustrating an example of installation positions of vehicle exterior information detection units and imaging units.

[Description of Embodiments]

Hereinafter, embodiments of an information processing device and an information processing method will be described with reference to the drawings. Hereinafter, main components of the information processing device will be mainly described, but the information processing device may have components or functions that are not illustrated or described. The following description does not exclude components or functions that are not illustrated or described.

[Configuration Example of Information Processing Device]

Fig. 1 is a block diagram illustrating a configuration example of an information processing device 1 according to the present disclosure. The information processing device 1 according to the present disclosure analyzes incident light from a predetermined light source, and extracts information included in the incident light. For example, this information processing device 1 can be configured using, for example an EVS, and applied to a camera system mounted in an industrial robot, an in-vehicle camera system, and the like. The information processing device 1 in Fig. 1 includes a pixel array unit 11, a control circuit 12, an arbiter 13, and a signal processing unit 14.
In the pixel array unit 11, a plurality of pixels 20 are arrayed in a two-dimensional lattice pattern. In the pixel 20, an event based on a change amount of a light amount of the incident light occurs. That is, in the pixel 20, an event occurs when an absolute value of the change amount of the light amount of the incident light exceeds a threshold. The event includes an on-event and an off-event, the on-event occurs when the change amount of the light amount of the incident light exceeds a predetermined upper limit threshold, and the off-event occurs when the change amount of the light amount of the incident light goes below a predetermined lower limit threshold. In this description, a signal indicating that the on-event has occurred in the pixel 20 will be referred to as an on-event signal, and a signal indicating that the off-event has occurred will be referred to as an off-event signal. Furthermore, in this description, the on-event signal and the off-event signal will be collectively referred to as an event signal.
The control circuit 12 controls the upper limit threshold for detecting occurrence of the on-event, and the lower limit threshold for detecting occurrence of the off-event. Furthermore, the control circuit 12 generates various control signals that are necessary to detect the on-event and the off-event occurring in each pixel 20, and supplies the control signals to each pixel 20.
The arbiter 13 arbitrates transfer of the event signal output from the pixel 20. When the on-event or the off-event occurs, the pixel 20 transmits to the arbiter 13 a request for transferring the event signal. The arbiter 13 arbitrates the request from each pixel 20, and returns a response that is based on an arbitration result to each pixel 20. When receiving a response to the request, the pixel 20 supplies the event signal to the signal processing unit 14.
The signal processing unit 14 performs predetermined signal processing on the event signal from the pixel 20. The signal processing unit 14 outputs data indicating a processing result to a circuit block at an outside of or at a subsequent stage of the information processing device 1. Although not illustrated, the circuit block at the subsequent stage includes, for example, a recording unit, an information processing unit, or the like.

[Configuration Example of Pixel]

Fig. 2 is a circuit diagram illustrating an example of the pixel 20. This pixel 20 includes a logarithmic response unit 21, a buffer 22, a differentiation circuit 23, and a comparator (event detection unit) 24.
The logarithmic response unit 21 includes a photoelectric conversion element 211 and a current/voltage conversion unit 210. The logarithmic response unit 21 performs logarithmic transformation on charge photoelectrically converted by the photoelectric conversion element 211, and generates a voltage signal VI. A reason for performing logarithmic transformation is to widen a dynamic range of the pixel 20 from which brightness information is acquired.
The photoelectric conversion element 211 generates charge matching an incident light amount when the pixel 20 receives light. As this photoelectric conversion element 211, for example, a photodiode is used. The photoelectric conversion element 211 includes a cathode that is connected to an input node 216 of the current/voltage conversion unit 210, and an anode that is connected to a predetermined reference potential (such as a ground potential) node such as a ground potential.

The current/voltage conversion unit 210 includes a transistor 212, a transistor 214, a transistor 215, and a capacitor 213. For the transistors 212 and 215, for example, N channel Metal-Oxide-Semiconductor (NMOS) transistors are used. For the transistor 214, for example, a P channel Metal-Oxide-Semiconductor (PMOS) transistor is used.

The transistor 212 includes a source that is connected to the cathode of the photoelectric conversion element 211, and a drain that is connected to a power supply voltage node. A gate of the transistor 212 is connected to a drain of the transistor 214 and a drain of the transistor 215, and this connection node is an output node 217 of the current/voltage conversion unit 210.

The transistor 214 and the transistor 215 are connected in cascode between the power supply voltage node and the predetermined reference potential node. A predetermined bias voltage Vblog is applied to a gate of the transistor 214. A gate of the transistor 215 is connected to the cathode of the photoelectric conversion element 211. The capacitor 213 is connected between the gate of the transistor 215 and the gate of the transistor 212.

The voltage signal VI subjected to logarithmic transformation by the current/voltage conversion unit 210 is input to the buffer 22. The buffer 22 includes a transistor 221 and a transistor 222 connected in cascode between the power supply voltage node and the ground voltage node. As the transistor 221 and the transistor 222, for example, PMOS transistors are used. A bias voltage Vbsf is applied to a gate of transistor 221, and a gate of the transistor 222 is connected with the output node 217 of the current/voltage conversion unit 210. A connection node of a drain of the transistor 221 and a source of the transistor 222 is an output node 223 of the buffer 22. The buffer 22 constitutes a source follower circuit, and outputs a pixel voltage Vp matching the voltage signal VI output from the current/voltage conversion unit 210.

The pixel voltage Vp output from the buffer 22 is input to the differentiation circuit 23. The buffer 22 can improve a driving force of the pixel voltage Vp. Furthermore, by providing the buffer 22, it is possible to secure isolation that prevents noise caused when the differentiation circuit 23 at a subsequent stage performs a switching operation from transmitting to the current/voltage conversion unit 210.

The differentiation circuit 23 calculates a change amount of the pixel voltage Vp by a differential operation. The differentiation circuit 23 includes a capacitor 231, a capacitor 234, a transistor 232, a transistor 233, and a transistor 235. As the transistor 232 and the transistor 233, for example, PMOS transistors are used. Furthermore, as the transistor 235, for example, an NMOS transistor is used.

The transistor 233 and the transistor 235 are connected in cascode between the power supply node and the reference voltage node. A predetermined bias voltage Vbdiff is input to a gate of the transistor 235. These transistors 233 and 235 function as inversion circuits that include a gate of the transistor 233 as an input node 236, and a connection node of the transistor 233 and the transistor 235 as an output node 237.

The capacitor 231 is inserted between the output node 223 of the buffer 22 and the gate of the transistor 233. This capacitor 231 supplies a current matching the change amount obtained by performing time differentiation on the pixel voltage Vp from the buffer 22 to the gate of the transistor 233. Furthermore, the capacitor 234 is inserted between the gate of the transistor 233 and the output node 237.

The change amount of the pixel voltage Vp indicates the change amount of the incident light amount of the pixel 20. The differentiation circuit 23 supplies a differential signal Vout indicating the change amount of the incident light amount to the comparator 24 via the output node 237.

The transistor 232 switches whether or not to short-circuit the gate and a source of the transistor 233 according to an auto-zero signal XAZ. The auto-zero signal XAZ is a signal for instructing initialization, and changes from, for example, a high level to a low level every time an event signal is output. Furthermore, the transistor 232 transitions to an on state according to the auto-zero signal XAZ, and sets the differential signal Vout to an initial value.

The comparator 24 compares the differential signal Vout and a predetermined voltage (an upper limit threshold voltage or a lower limit threshold voltage) indicating a boundary of a certain voltage range. This comparator 24 includes a transistor 241, a transistor 242, a transistor 243, and a transistor 244. As the transistor 241 and the transistor 243, for example, PMOS transistors are used. Furthermore, as the transistor 242 and the transistor 244, for example, NMOS transistors are used.

The transistor 241 and the transistor 242 are connected in cascode between the power supply node and the reference voltage node. A gate of the transistor 241 is connected to the differentiation circuit 23. An upper limit threshold voltage Vhigh is applied to a gate of the transistor 242. A voltage of a connection node of the transistor 241 and the transistor 242 is output as a comparison result COMP+ with respect to the upper limit threshold voltage Vhigh.

The transistor 243 and the transistor 244 are connected in cascode between the power supply node and the reference voltage node. A gate of the transistor 243 is connected to the differentiation circuit 23. A lower limit threshold voltage Vlow is applied to a gate of the transistor 244. A voltage of a connection node of the transistor 243 and the transistor 244 is output as a comparison result COMP- with respect to the lower limit threshold voltage Vlow.

The comparator 24 outputs the on-event signal COMP+ when the differential signal Vout is higher than the upper limit threshold voltage Vhigh, and outputs the off-event signal COMP- when the differential signal Vout is lower than the lower limit threshold voltage Vlow.

The comparator 24 compares both of the upper limit threshold voltage Vhigh and the lower limit threshold voltage Vlow with the differential signal Vout, yet may compare one of these voltages with the differential signal Vout. Consequently, it is possible to simplify the internal configuration of the comparator 24. When, for example, comparison is performed only with the upper limit threshold voltage Vhigh, only the transistor 241 and the transistor 242 are necessary, and the transistor 243 and the transistor 244 can be omitted.

Fig. 3 is a graph showing an example of input/output characteristics of the comparator 24 according to the present disclosure. The vertical axis in Fig. 3 indicates a voltage level (output level) of an output signal (the on-event signal COMP+ and the off-event signal COMP-) of the comparator 24, and the horizontal axis indicates a voltage level (input level) of an input signal (differential signal Vout) of the comparator 24. Furthermore, a solid line indicates a trajectory of the on-event signal COMP+, and a dashed dotted line indicates a trajectory of the off-event signal COMP-.

A light amount at a time when the differential signal Vout is at a "0" level is set as a reference, and, when a positive light amount difference (fluctuation amount) with respect to this reference exceeds a value corresponding to the upper limit threshold voltage Vhigh, the on-event signal COMP+ changes form the low level to the high level. The change amount associated with this upper limit threshold voltage Vhigh will be referred to as a "unit change amount (+)" below. On the other hand, when a negative light amount difference with respect to the reference goes below a value corresponding to the lower limit threshold voltage Vlow, the off-event signal COMP- changes from the high level to the low level. The change amount associated with this lower limit threshold voltage Vlow will be referred to as a "unit change amount (-)" below.

As described above, in the pixel 20, an event occurs when the absolute value of the change amount of the light amount of the incident light on the photoelectric conversion element 211 exceeds the threshold. More specifically, the change amount of the light amount on the incident light on the photoelectric conversion element 211 is detected based on the differential signal Vout. When the differential signal Vout exceeds the unit change amount (+), the event signal COMP+ of a polarity+1 level is output. Furthermore, when the differential signal Vout goes below the unit change amount (-), the event signal COMP- of the polarity-1 level is output.

[Configuration Example of Semiconductor Chip]

Fig. 4 is a schematic view illustrating a laminated structure of the information processing device 1 according to the present disclosure. The information processing device 1 according to the present disclosure can be configured by, for example, the laminated structure of a semiconductor chip. The information processing device 1 in Fig. 2 is configured by laminating a pixel chip 2 and a circuit chip 3. These chips are connected by a Cu-Cu junction, a via, a bump, or the like to transmit various signals.

Each component in the information processing device 1 illustrated in Figs. 1 and 2 is disposed in one of the pixel chip 2 and the circuit chip 3, and allocation of each component to be disposed in the pixel chip 2 and the circuit chip 3 is arbitrary. Note that, although Fig. 2 illustrates the example where the current/voltage conversion unit 210, the buffer 22, the differentiation circuit 23, and the comparator 24 are provided inside the pixel 20, at least part of the current/voltage conversion unit 210, the buffer 22, the differentiation circuit 23, and the comparator 24 may be disposed in the circuit chip 3. Even in such a case, this description will be described assuming that the pixel 20 includes the current/voltage conversion unit 210, the buffer 22, the differentiation circuit 23, and the comparator 24. Furthermore, the information processing device 1 is not limited to the laminated structure as illustrated in Fig. 2. The information processing device 1 may have a flat type chip structure that each component illustrated in Figs. 1 and 2 is disposed in the same chip.

[First Embodiment]

The information processing device 1 according to the present disclosure emits light including some information from the light source, receives light from the light source at least part of the pixels 20 in the pixel array unit 11, and decodes the information included in the received light. Fig. 5 is a schematic view for describing a method for receiving light emitted by a light source of a fixed position, and analyzing information included in the received light.

Fig. 5 illustrates an example where a light reception surface 6 of the information processing device 1 receives incident light from a light source 4. In a predetermined analysis period, a positional relationship between the light source 4 and the light reception surface 6 is fixed, and the incident light from the light source 4 continues to be received within a certain range 61 on the light reception surface 6. Since the light source 4 controls durations and the numbers of light emission periods and light-off periods of the light, and the light from the light source 4 that can emit light including arbitrary information has a predetermined beam diameter, the one or more pixels 20 in the range 61 on the light reception surface 6 receives the light from the light source 4.

An on-event occurs in the pixel 20 that has received the light from the light source 4 when the light amount of the received light exceeds the upper limit threshold, and an on-event signal is output. Furthermore, an off-event occurs when the light amount of light received so far goes below the lower limit threshold, and an off-event signal is output. The on-event signal and the off-event signal are sampled as an event stream 5. Fig. 5 illustrates an example where the on-event signal and the off-event signal output from the specific pixel 20 in the range 61 on the light reception surface 6 are sampled.

The on-event signal is generated when the light source 4 is switched from the turn-off state to the light emission state, and the off-event signal is generated when the light source 4 is switched from the turn-on state to the turn-off state. According to a duration of a period required to switch the turn-off state to the turn-on state, the number of output on-event signals changes. Similarly, according to a duration of a period required to switch the turn-on state to the turn-off state, the number of output off-event signals changes.

Although Fig. 5 illustrates the example where a pixel position of the light reception surface 6 that receives the light from the light source 4 does not change, a light source may move while emitting light or the light reception surface 6 may move. In this description, a light source under such a circumference will be referred to as an active light source. The active light source includes a case where the light source itself moves and a case where the light reception surface 6 moves. Fig. 6 is a schematic view for describing a method for analyzing information included in light from the active light source.

Fig. 6 illustrates an example where, during the predetermined analysis period, the positional relationship between the light source 4 and the light reception surface 6 fluctuates, and a portion at which the incident light from the light source 4 is received changes as the time passes. In a case in Fig. 6, the method that has been described citing the example in Fig. 5, and samples the event signals having occurred in the specific pixel 20 in the range 61 may not be able to correctly extract information included in the light from the light source 4. Each embodiment described below has a feature that, even when a pixel position at which the light from the light source is received changes, it is possible to correctly extract information included in light from the light source.

Fig. 7 is a flowchart illustrating a schematic processing operation of the information processing device 1 according to the first embodiment of the present disclosure. First, an event occurs in each pixel 20 on the light reception surface 6 (step S1). When, for example, the change amount of the light amount of the incident light exceeds the upper limit threshold, the plurality of pixels 20 output on-event signals.

One event group including a set of events whose occurrence timings and positions on the light reception surface 6 are close, and whose event signals COMP have the same polarity among the above plurality of events that have occurred is generated (step S2).

Next, one representative event is extracted from the event group calculated in step S2 (step S3). The representative event refers to an event that is extracted to typically express characteristics of the event group, and details thereof will be described later.

Next, a time difference between event occurrence timings is calculated between the representative event newly extracted in step S3 and a representative event that relates to this representative event and has already been extracted (step S4). Next, the information included in the light from the light source is estimated from the time difference calculated in step S4 (step S5).

In the example in Fig. 5, the method for estimating the information included in the light from the light source based on the time difference between events having occurred in the one pixel 20 has been described. By contrast with this, a flow in Fig. 7 differs in estimating information included in light from the light source based on a time difference between representative events.

Fig. 8 is a conceptual view of an event group and a representative event. x and y in Fig. 8 represent two-dimensional coordinates on the light reception surface 6, and t represents an occurrence time of an event. An arbitrary event ei includes event information including a position (xi, yi) on the light reception surface 6 at which an event has been detected, an event occurrence time (hereinafter, referred to as a time stamp ti), and the polarity (pi) of an event signal COMP. In Fig. 8, a plurality of events are plotted on an x-y-t coordinate axis.

The information processing device 1 according to the present disclosure extracts an event stream 51 including events having occurred within a predetermined time range $\tau$. The event stream 51 may include pluralities of events and event groups.

An event group G is a set of events that are temporally and spatially close and have the same polarity. When, for example, light from the light source is incident on the plurality of neighboring pixels 20, on-events occur in the plurality of these pixels 20, and then the on-events having occurred in the plurality of these pixels 20 are classified into the same event group. The event group G may be determined from the event stream 51 by clustering (such as Mean shift or DBSCAN), and may be determined by pattern analysis (such as circle detection by Hough transform, Blob detection, or CNN).

Furthermore, the information processing device 1 according to the present disclosure extracts one representative event r that represents a position and a time of an event group per event group G. The representative event r may be calculated from an average value of each event information included in the event. Alternatively, the event ei whose time stamp ti is minimum among the events belonging to the event group G may be selected as a representative event.

Similarly to the event ei, an arbitrary representative event rj includes representative event information including a position (xj, yj), a time stamp (tj), and a polarity (pj). Furthermore, the representative event rj includes range information bbox that indicates a range of the event group G. The range information bbox includes a maximum value and a minimum value (xmin, xmax, ymin, and ymax) of a position, and a maximum value and a minimum value (tmin and tmax) of a time stamp among events belonging to the event group G.

Fig. 9A is a view illustrating an example where a position of the event group G having occurred within the predetermined time range τ moves as the time passes. A y axis in Fig. 9A indicates y coordinates of the light reception surface 6, and a t axis indicates a time. Fig. 9A illustrates event groups G1, G2, and G3. The event groups G1 and G3 are aggregates of on-events. Furthermore, the event group G2 is an aggregate of off-events. The event groups G1, G2, and G3 include representative events r1, r2, and r3, respectively.

A time interval Ton between the representative event r1 that is the on-event and the representative event r2 that is the off-event can be calculated as follows from a difference between time stamps t1, t3, and t5 of these representative events r1, r2, and r3.

$$\mathrm{Ton} = \mathrm{t3\text{-}t1}$$

Furthermore, a time interval Toff between the representative event r2 that is the off-event and the representative event r3 that is the on-event can be calculated as follows. Toff = t5-t3

By using these time intervals Ton and Toff, it is possible to decode information included in light from the light source. Fig. 9B illustrates an example where 1-bit information is transmitted from the light source per time interval T. The one time interval T includes the time interval Ton at which incident light transitions from a turn-off state to a light emission state and maintains a light emission state, and the time interval Toff at which the incident light transitions from the light emission state to the turn-off state and maintains the turn-off state. Of these intervals, information of bit 0 (e.g., 1) can be obtained from the duration of the time interval Ton.

As described above, it is possible to decode the information of bit 0 based on information of three representative events associated with the three event groups G1 to G3. It is possible to sequentially decode information of bit 1 and subsequent bits based on information of a representative event sequentially extracted thereafter.

Fig. 10 is a block diagram illustrating a configuration example of the signal processing unit 14 according to the first embodiment of the present disclosure. The signal processing unit 14 includes an event group extraction unit 141 and a representative event extraction unit 142.

The event group extraction unit 141 accepts events from the plurality of pixels 20. The event group extraction unit 141 extracts an event group including a plurality of temporally and spatially close events based on the event having occurred within the predetermined time range τ among the accepted events, and supplies the event group to the representative event extraction unit 142.

The representative event extraction unit 142 extracts a representative event that represents the plurality of events included in the event group extracted by the event group extraction unit 141.

The signal processing unit 14 in Fig. 10 may include an information processing unit 144. The information processing unit 144 decodes the information included in the light from the light source based on the representative event extracted by the representative event extraction unit 142.

The signal processing unit 14 may include a First In First Out (FIFO) memory 146 (second storage unit). The FIFO memory 146 stores data related to occurrence times of events having occurred in the pixels 20 in chronological order. The event group extraction unit 141 can process events in chronological order by reading from the FIFO memory 146 data in order from data stored in the FIFO memory 146. Furthermore, the event group extraction unit 141 can narrow down all events only to events having occurred within the predetermined time range τ by reading the occurrence times of the events from the FIFO memory 146. The FIFO memory 146 may store data related to the polarity of events and occurrence times of the events in addition to the occurrence times of the events.

The signal processing unit 14 may include a spatial buffer 147 (third storage unit). The spatial buffer 147 associates data related to an event with a spatial positional relationship of the event in the pixel 20 to store. The event group extraction unit 141 can efficiently search for a spatially close event based on the spatial positional relationship between the events stored in the spatial buffer 147, and extract an event group.

The signal processing unit 14 in Fig. 10 may include a time difference detection unit 143. The time difference detection unit 143 detects a time difference between occurrence times of a new representative event extracted by the representative event extraction unit 142, and a representative event that is close to this representative event and has already been extracted. The detected time difference is sent to the information processing unit 144. The time difference detection unit 143 may compare an already supplied representative event and the new representative event and output a time difference when the events are spatially close, or output a time difference when the events have different polarities. Alternatively, the time difference detection unit 143 may refer to the range information bbox of the already extracted representative event, and, when the new representative event is outside a temporal range included in the range information bbox or when the new representative event is outside a temporal range included in the range information bbox and is within a spatial range included in the range information bbox, output a time difference.

The information processing unit 144 decodes information (e.g., bit array) included in light from the light source based on the time difference detected by the time difference detection unit 143.

The signal processing unit 14 may include a tracking list storage unit (first storage unit) 145. The tracking list storage unit 145 stores information related to the representative event extracted by the representative event extraction unit 142. In this case, when a new representative event is extracted, the time difference detection unit 143 reads from the representative event storage unit a representative event close to the new representative event, and detects a time difference between occurrence times of these representative events.

The tracking list storage unit 145 may use decoding data to store. When, for example, the information processing unit 144 decodes the bit array of the information included in the light from the light source one bit by one bit, the bit array that is being decoded can be sequentially accumulated in the tracking list storage unit 145. The tracking list storage unit 145 may store together a count value of a bit counter that counts the number of bits of the bit array that is being decoded. The information processing unit 144 can determine based on the count value of this bit counter whether or not, for example, all pieces of information included in the light from the light source could have been decoded.

The tracking list storage unit 145 may associate decoding intermediate data with the representative event data to store. Consequently, every time a representative event is newly extracted, it is possible to read an optimal representative event from the tracking list storage unit 145 and detect the above-described time difference, and associate data of a new decoded bit and a new count value of the bit counter with the representative event to store in the tracking list storage unit 145. In this case, the information processing unit 144 may process decoding data of each representative event in parallel. Consequently, the information processing unit 144 can decode information transmitted from a plurality of light sources in parallel.

An example of a method for decoding the information included in the light from the light source according to the first embodiment of the present disclosure will be described. Fig. 11 is a view for schematically describing a method for analyzing the information included in the light from the light source according to the first embodiment of the present disclosure. Fig. 11 illustrates an example where the light reception surface 6 simultaneously receives a plurality of beams of incident light.

All beams of incident light do not necessarily include meaningful information. Part of beams of incident light may be also noise light. The light source that emits light including information controls a light emission period, a turn-off period, and the number of times of light emission of light according to information that needs to be transmitted. The information processing device 1 according to the first embodiment sets the predetermined time range τ for extracting an event group and a representative event.

Fig. 12 is a view illustrating a relationship between an event having occurred in the pixel 20, data stored in the FIFO memory 146 and the spatial buffer 147, and representative data to be extracted. The FIFO memory 146 stores data related to occurrence times of events having occurred in the pixels 20. In an example in Fig. 12, event chronological order information (second data) including occurrence positions and occurrence times of events is stored in the FIFO memory 146. The spatial buffer 147 stores event space information (third data) obtained by associating data related to an event having occurred in the pixel 20 with spatial position information of the event.

The FIFO memory 146 stores event chronological order information including at least position information and time information in event information $(x_j, y_j, t_j, p_j)$ of each event $e_j$ in occurrence order of events. In the present embodiment, the event chronological order information also includes polarity information. A HEAD of the FIFO memory 146 indicates a location at which event chronological order information of an event of a latest occurrence time is stored, and a TAIL indicates a location at which event chronological order information of an event of an oldest occurrence time is stored.

The spatial buffer 147 associates event space information with position information of each event to store. The event space information is address information of the FIFO memory 146 in which event chronological order information associated with events is stored in the present embodiment. More specifically, when the event $e_j$ newly occurs, event information of the event $e_j$ is stored at a predetermined address $a_i$ in the FIFO memory 146, and the address $a_i$ is stored at a position $(x_j, y_j)$ of the event $e_j$ in the spatial buffer 147.

The predetermined time range τ is a period that goes back from an occurrence time of a latest event to the time τ. In an initial state, the predetermined time range τ is a temporal range of $t_j$ to $t_j-τ$ for which the occurrence time $t_j$ of the event $e_j$ stored in the HEAD of the FIFO memory 146 is set as a reference. This time range τ includes a plurality of events. The time range τ is provided to extract a representative event. That is, in the present embodiment, a representative event is extracted based on an event having occurred within the time range τ.

In parallel to the representative event extraction processing, the event information in the FIFO memory 146 is updated. When an event (e.g., $e_{j+1}$) occurs in any one of the pixels 20 on the light reception surface 6, the time range τ for extracting the representative event is updated to a period of $t_{j+1}$ to $t_{j+1}-τ$ for which an occurrence time of the latest event $e_{j+1}$ is set as a reference. Thus, an old event (e.g., event $e_{j-1}$) falling outside this time range τ may occur. The FIFO memory 146 performs PUSH processing of adding the latest event $e_{j+1}$ to the HEAD side in conjunction with the time range τ, and performs POP processing of extracting and deleting the old event $e_{j-1}$ from the TAIL side. Processing of extracting an event group and a representative event is performed at the same time as that of update of this FIFO memory 146.

Figs. 13A to 13F are views for describing examples where an event group is extracted using the event chronological order information in the FIFO memory 146 and the event space information in the spatial buffer 147. First, Fig. 13A illustrates an initial state before PUSH and POP are performed in the FIFO memory 146. In the FIFO memory 146, event information of events ej-4 to ej of time stamps tj-4 to tj is stored. Furthermore, in the spatial buffer 147, event space information P1 to P5 is stored at positions designated by the events ej-4 to ej.

Fig. 13B illustrates an example where the new event ej+1 of the time stamp tj+1 has occurred. In this case, the time range τ moves, and the event chronological order information of the events ej-3 and ej-4 that have fallen outside the time range τ are targets to be deleted from the FIFO memory 146.

The event chronological order information of events having fallen outside the time range τ are popped in chronological order. Furthermore, processing of extracting an event group and a representative event is performed at a time of this pop. Fig. 13C illustrates processing of the event ej-4. First, referring to position information (xj-4, yj-4) of the event ej-4, the event space information (the event space information P3 in this example) arranged at the position (xj-4, yj-4) of the spatial buffer 147 is extracted. Furthermore, search is performed around the event space information P3 to check whether or not there is close event space information. When there is the close event space information (P2 and P4 in this example), these pieces of event space information (the event space information P2 and P4 in this case) are acquired.

The event space information P2, P3 and P4 acquired as described above is, for example, event space information of the events ej-2, ej-4, and ej. According to the processing in Fig. 13C, an event group E including the events ej-2, ej-4, and ej is generated.

The event space information P2, P3, and P4 includes address information of the FIFO memory 146 in which event chronological order information of the events ej-2, ej-4, and ej is stored. It is possible to obtain the event information of the events ej-2, ej-4, and ej based on the event chronological order information of the FIFO memory 146 associated with these pieces of address information.

Next, search is further performed around the event space information included in the event group E. Fig. 13D illustrates an example where search is performed around the event space information P2, and the event space information P1 is newly discovered. Similarly to the event space information P2 and P4, an event group E' including the event ej-1 associated with the event space information P1 is generated based on this event space information P1.

Although not illustrated, search is also performed around the event space information P4 acquired as in Fig. 13C and the event space information P1 acquired as in Fig. 13D likewise. When event space information is discovered, an event group is generated, and search is performed around the event space information of events included in the event group. This processing is repeated until event space information can be no longer discovered. Finally, an event group G including all formed event groups (the event groups E and E' in a case of this example) is generated.

Representative events are extracted from the events ej-4, ej-2, ej-1, and ej included in the event group G. As soon as extraction of the representative event based on the event ej-4 is finished, the event space information P1, P2, P3, and P4 related to the events included in the event group G are deleted from the spatial buffer 147. Furthermore, the event ej-4 is popped from the FIFO memory 146. In this case, event chronological order information of the event ej-3 is stored at the TAIL of the FIFO memory 146.

Fig. 13E is a view illustrating processing of the event ej-3. Search is also performed around the event space information P5 related to the event ej-3 similarly to the event ej-4. In this regard, in Fig. 13E, there is no event space information around the event space information P5.

As described above, when a predetermined number of items of data or more cannot be discovered at the time of search around the event space information P5, a representative event is not extracted. In this case, the event space information P5P5 is regarded as noise data and deleted. Furthermore, the event chronological order information of the event ej-3 is popped from the FIFO memory 146.

Fig. 13F is a view illustrating processing of the event ej+1. The event ej+1 is pushed to a HEAD position of the FIFO memory 146. Furthermore, event space information P6 is added to a position indicated by the position information (xj+1, yj+1) of the event ej+1 of the spatial buffer 147.

Figs. 14A and 14B are flowcharts illustrating a processing operation of the information processing device 1 according to the present embodiment. The processing in Fig. 14A is performed by the event group extraction unit 141 illustrated in Fig. 11. First, standby is performed for occurrence of an event in any one of the pixels 20 (step S11). When the event ej+1 occurs in any one of the pixels 20, this pixel 20 passes event information (xj+1, yj+1, pj+1, tj+1) of the event ej+1 to the event group extraction unit 141 (step S12).

Next, the event group extraction unit 141 acquires event chronological order information (xi, yi, pi, ti) of the event ei stored at the TAIL of the FIFO memory 146 (step S13). Next, whether or not the time stamp tj+1 of the event ej+1 acquired in step S12 is larger than a time stamp obtained by adding the predetermined time range τ to the time stamp ti of the event ei at the TAIL of the FIFO memory 146 is determined (step S14). When determination in step S14 is YES, it is determined that the event ej+1 is outside the time range τ, and, when determination in step S14 is NO, it is determined that the event ej+1 is within the range of the time range τ.

When NO is determined in step S14, it is determined that events within the time range τ for extracting a new representative event has not yet been collected. In this case, the event group extraction unit 141 accepts from the spatial buffer 147 data of a pixel position (xi, yi) at which the event ej+1 has occurred, and checks whether or not event space information has already been registered for the data (step S15). In a case where the event space information has already been registered for the data, previously stored event space information is preferentially used, and the event ej+1 is discarded. In this case, the flow returns to step S11 to stand by for occurrence of a new event.

When it is determined in step S15 that data at a corresponding position on the spatial buffer 147 is null, the event group extraction unit 141 stores event chronological order information of the event ej+1 on the HEAD side of the FIFO memory 146 (step S16). Next, the event group extraction unit 141 stores an address a of the HEAD of the FIFO memory 146, that is, the address a of the event chronological order information of the event ej+1 at the position (xi, yi) of the spatial buffer 147 (step S17). Thus, in the spatial buffer 147, address information for designating a location in the FIFO memory 146 that stores the event chronological order information of the event ej+1 that has newly occurred is stored as the event space information.

Determining YES in step S14 indicates that, when the new event ej+1 has occurred in step S11, event chronological order information within the time range τ is stored in the FIFO memory 146, and representative event extraction processing is performed (step S18). The representative event extraction processing will be described with reference to the flow in Fig. 14B to be described later. After the representative event extraction processing is finished, the event space information of the event ei used for the representative event extraction processing is deleted from the spatial buffer 147 (step S19).

More specifically, the event group extraction unit 141 overwrites NULL data at the position (xi, yi) of the spatial buffer 147, and deletes the event space information. Next, the event group extraction unit 141 pops the event chronological order information of the event ei from the TAIL in the FIFO memory 146 (step S20).

Then, the flow returns to step S13 to acquire the event chronological order information of the event ei again from the TAIL of the FIFO memory 146. The event chronological order information at the TAIL in the FIFO memory 146 is popped by the above-described processing in step S20, and, in step S13, the event chronological order information of the event ei that has been stored for the longest time in the FIFO memory 146 is acquired. Next, whether or not the time stamp tj+1 of the event ej+1 having occurred in step S11 is larger than a time stamp obtained by adding the time range τ to the time stamp ti of the event ei is determined (step S14). Furthermore, processing in steps S15 to S20 is performed based on a determination result as described above.

As described above, in Fig. 14A, when a new event occurs, whether or not event chronological order information within the time range τ is stored in the FIFO memory 146, and, if the event chronological order information is not stored, new event chronological order information is stored in the FIFO memory 146, and address information of the FIFO memory 146 is associated with a pixel position of a new event and is stored as event space information in the spatial buffer 147. When it is determined that the event chronological order information within the time range τ is stored in the FIFO memory 146, the event chronological order information that has been stored for the longest time in the FIFO memory 146 is read, the representative event extraction processing is performed, and subsequently read event chronological order information is deleted. Consequently, when a new event occurs, it is possible to read data of the event ei within the time range τ in the FIFO memory 146, and perform the representative event extraction processing to be described later.

Fig. 14B is a flowchart illustrating a detailed processing operation of the representative event extraction processing in step S19 in Fig. 14A. The processing in Fig. 14B is performed by the representative event extraction unit 142 illustrated in Fig. 11. First, data of the position (xi, yi) designated by the event ei is accepted from the spatial buffer 147, and whether or not there is effective event space information is checked (step S31).

Next, data in the spatial buffer 147 is searched for, and effective event space information existing around the event space information of the event ei is read. In the first embodiment, the address information of the FIFO memory 146 is stored in the spatial buffer 147 as described above. The FIFO memory 146 is referred to per address information read from the spatial buffer 147 to acquire corresponding event chronological order information.

Fig. 15 is a view illustrating an example of data stored in the FIFO memory 146. In the FIFO memory 146, data including positions, the polarity, and time stamps is stored per event. In above-described step S32, data (event chronological order information) of a position, the polarity, and a time stamp of a specific event in the FIFO memory 146 corresponding to the address information read from the spatial buffer 147 is read.

In the first embodiment according to the present disclosure, the event group E is generated based on the event chronological order information accepted from the FIFO memory 146. When the event group E is generated, event information of the processing target event ei and the acquired event may be compared to determine whether or not to include the event ei in the event group E. For example, an event having a same polarity p as that of the event ei or an event whose difference of a time stamp t from that of the event ei is within a predetermined range may be included in the event group E.

Next, the number of events N (E) in the generated event group E is counted (step S33). When the number of events N (E) does not exceed a predetermined lower limit number of events Emin, the representative event extraction processing is finished assuming that the events are noise data. When it is determined in step S33 that the number of events N (E) exceeds the lower limit number of events Emin, the event ei is registered in the event group G (step S34), and data at the position (xi, yi) of the spatial buffer 147 is overwritten to NULL. Next, an event in the event group E is registered in the event group G (step S35).

Next, event space information located around event space information of the event included in the event group E is searched for from the spatial buffer 147, and the event group E' is generated similarly to step S32 (step S36). Similarly to step S33, in step S37, whether or not the number of items of event data N (E') of the generated event group E' is the lower limit number of events Emin or more is determined (step S37). When YES is determined in step S37, data of the event group E' is registered in the event group E (step S38), and processing in and after step S35 is performed again.

On the other hand, when NO is determined in step S37, whether or not the number of items of event data N (G) of the event group G is larger than a lower limit number of events Gmin is determined (step S39). When NO is determined in step S39, the representative event extraction processing is finished. When YES is determined, the representative event r is extracted based on the event group G (step S40).

Fig. 16 is a view illustrating an example of a data configuration of a representative event extracted by the representative event extraction unit 142. The representative event includes representative event information including the position x and y, the polarity p, the time stamp t, and the range information bbox as described above. According to processing in step S40 in Fig. 14B, the position (x, y) and the time stamp t of the representative event are, for example, an average value of positions and an average value of time stamps of all events in the event group G. Furthermore, the polarity p of the representative event is set to the polarity pi of the event ei. Furthermore, the range information bbox includes the maximum values and the minimum values (xmin, xmax, ymin, ymax, tmin, and tmax) of positions and time stamps of all events belonging to the event group G. As described above, the range information bbox is information for specifying the range of the event group G to which the representative event belongs.

Every time the representative event extraction unit 142 extracts a new representative event, the time difference detection unit 143 performs processing. Fig. 17 is a flowchart illustrating a processing operation of the time difference detection unit 143. The time difference detection unit 143 stands by until the new representative event arrives from the representative event extraction unit 142 (step S51). When the new representative event arrives, the time difference detection unit 143 checks whether or not there is a representative event related to the new representative event by searching for the representative event in the tracking list storage unit 145 (step S52).

The related representative event is, for example, a representative event that has the polarity different from the new representative event, whose time stamp does not exist within a range of a maximum value and a minimum value of a time designated by the range information bbox, whose position exists within a range of a maximum value and a minimum value of a position designated by the range information bbox, and whose position or time stamp is the closest.

The related representative event may be a representative event whose position or time stamp is the closest to that of the new representative event.

Alternatively, the related representative event may be a representative event whose time stamp does not exist within the range of the minimum value and the minimum value of the time designated by the range information bbox of the new representative event and whose position or time stamp is the closest.

Alternatively, the related representative event may be a representative event whose time stamp does not exist within the range of the maximum value and the minimum value of the time designated by the range information bbox of the new representative event, whose position exists within the range of the maximum value and the minimum value of the position designated by the range information bbox, and whose position or time stamp is the closest.

Alternatively, the related representative event may be a representative event that has the polarity different from that of the new representative event, and whose position or time stamp is the closest.

Alternatively, the related representative event may be a representative event that has the polarity different from that of the new representative event, whose time stamp does not exist within the range of the maximum value and the minimum value of the time designated by the range information bbox, and whose position or time stamp is the closest.

When it is checked in step S52 that there is no related representative event in the tracking list storage unit 145, the time difference detection unit 143 adds tracking information (first data) related to the new representative event, and stores the tracking information in the tracking list storage unit 145 (step S53).

Fig. 18 is a view illustrating a configuration example of tracking information. The tracking information includes event information (the position x and y, the polarity p, and the time stamp t) of a finally extracted representative event, a decoded bit sequence, and a bit count value in decoded data.

In step S53, event information of the new representative event is stored as event information of a representative event in the tracking information. Furthermore, 0 is set to the decoded bit sequence to initialize. Furthermore, -1 is set to the bit count value for determination of detection of a start bit to be described later.

When it is checked in step S52 that there is the related representative event in the tracking list storage unit 145, tracking information of the related representative event is obtained. Furthermore, the time difference detection unit 143 detects a time difference $\Delta t$ between time stamps of a supplied representative event and the related representative event, and supplies the time difference $\Delta t$ to the information processing unit 144 (step S54).

Next, the information processing unit 144 performs processing of decoding the information included in the light from the light source based on the above time difference $\Delta t$ between the time stamps and the tracking information of the related representative event (step S55). This decoding processing will be described with reference to Fig. 19 to be described later. According to this decoding processing, decoded data and a bit count value in the decoded data can be obtained. The tracking information of the related representative event obtained in step S54 is updated based on these bit count value and decoded data, and the position, the polarity, and the time stamp of the representative event, and is stored in the tracking list storage unit 145 (step S56).

Fig. 19 is a flowchart illustrating a processing operation of the information processing unit 144. The information processing unit 144 performs bit determination based on the time difference $\Delta t$ accepted from the time difference detection unit 143 (step S61). Fig. 20 is a view illustrating an example of bit determination of the time difference detection unit 143. The information processing unit 144 determines which one of respectively different predetermined determination criterion values Tstart, Tbit0, and Tbit1 the time difference $\Delta t$ corresponds to. The determination criterion values Tstart, Tbit0, and Tbit1 have respectively different time lengths. When the time difference $\Delta t$ corresponds to the determination criterion value Tstart, bit data is determined as a start bit, when the time difference $\Delta t$ corresponds to the determination criterion value Tbit0, bit data is determined as 0, and when the time difference $\Delta t$ corresponds to the determination criterion value Tbit1, bit data is determined as 1. Hereinafter, a determined bit value will be referred to as bit data b.

The time difference $\Delta t$ does not necessarily substantially match with any one of the determination criterion values Tstart, Tbit0, and Tbit1. When, for example, it is determined that the time difference $\Delta t$ corresponds to the determination criterion value Tstart, the time difference $\Delta t$ only needs to be within a certain time range near the determination criterion value Tstart. Furthermore, time ranges of the determination criterion values Tstart, Tbit0, and Tbit1 are set without overlapping each other. Although the determination criterion value Tbit0 takes a value larger than the determination criterion value Tbit1 in the example in Fig. 20, the determination criterion value Tbit0 may take a value smaller than the determination criterion value Tbit1. The determination criterion value Tstart of the start bit is desirably a value larger than the determination criterion value Tbit0 and the determination criterion value Tbit1.

Whether or not the bit data b determined in step S61 is a start bit is checked (step S62). When the bit data b is checked as the start bit, a bit count value Ci is set to 0 (step S63). Thus, the bit count value Ci of the tracking information is updated to 0, and processing in Fig. 19 is finished without updating a decoded bit sequence.

When the bit data b is determined as 0 or 1, the bit count value Ci of the related representative event is checked (step S64). A case where the bit count value Ci is checked as -1 is a state where the start bit from the light source is not received. In this case, the processing in Fig. 19 is finished without updating the decoded bit sequence and the bit count value of the tracking information. Note that a case where the bit count value Ci is -1 is a case where, for example, all bits of the bit counter are 1.

When the bit count value Ci is 0 or more and smaller than the predetermined number of decoded bits N, the bit data b is added to Ci bits of a decoded bit sequence Di of the related representative event. Furthermore, 1 is added to the bit count value Ci (step S65), and the processing in Fig. 19 is finished. The tracking information of the related representative event is updated based on the updated decoded data Di and bit count value Ci.

When the bit count value Ci matches with the predetermined number of decoded bits N, a parity is checked. More specifically, whether or not a number obtained by adding the bit data b to a sum of bits of the decoded data Di is, for example, an even number is checked. When, for example, the number is an odd number, it is regarded that an error has been detected (step S66).

When an error is not detected in step S66, the signal processing unit 14 outputs the decoded data Di in a format in Fig. 22 to be described later to, for example, a circuit unit at a subsequent stage (step S67). Next, the bit count value Ci is set to -1, and the decoded data Di is set to 0 to initialize (step S68). The decoded bit sequence and the bit count value of the tracking information are updated based on the initialized decoded data Di and bit count value Ci.

When an error is detected in step S66, the bit count value Ci and the decoded data Di are initialized (step S68), and the processing in Fig. 19 is finished. In this case, the decoded bit sequence and the bit count value of the tracking information are updated based on the initialized decoded data Di and bit count value Ci.

Fig. 21 is a view illustrating a bit sequence data configuration of information transmitted from the light source. A head Start Of Frame (SOF) of the bit sequence data includes a start bit (Start) of one or more bits, and a tail End Of Frame (EOF) includes a parity bit (Parity) of one or more bits. Furthermore, a bit sequence (Payload) sandwiched between the head SOF and the tail EOF) includes data (Data) of the number of bits N.

Although Fig. 19 illustrates the processing in a case where the start bit and the parity bit are one bit, the start bit and the parity bit may be two bits or more. When the start bit is two bits or more, it is possible to improve determination accuracy of the start bit included in information transmitted from the light source. Furthermore, by adding to the parity bit a redundant code such as a Hamming code having the number of bits corresponding to the number of bits of data, it is possible to perform more accurate bit error detection and error correction.

Fig. 22 is a view illustrating an example of an output format of information output by the signal processing unit 14. The format illustrated in Fig. 22 includes the decoded data Di decoded by the processing illustrated in Fig. 19, the position $xi$ and $yi$ of a representative event, and the time stamp $ti$ of the representative event. It is possible to specify the information included in the light from the light source based on the decoded data Di. Furthermore, it is possible to estimate a position on the light reception surface 6 on which the light from the light source has been incident based on the position of the representative event. Furthermore, it is possible to estimate a time at which the light from the light source has been incident based on a time stamp of the representative event. These can be appropriated for estimation of an own position to be described later or the like.

Thus, in the first embodiment of the present disclosure, an event group including two or more temporally and spatially close events among a plurality of events having occurred in the plurality of pixels 20 is generated, and a representative event is extracted from the event group. According to the first embodiment, it is possible to decode information included in light having been incident on the plurality of pixels 20 from the light source based on a time difference between two related representative events. Consequently, even when the positional relationship between the light source and the light reception surface 6 changes, it is possible to easily and accurately decode the information included in the light from the light source 4.

[Second Embodiment]

A plurality of modes of the event space information to be stored in the spatial buffer 147 are conceived. In the first embodiment of the present disclosure, address information for designating a storage location of an event in the FIFO memory 146 is stored as event space information. In this case, event information cannot be directly acquired from the spatial buffer 147, and the event information is acquired by referring to the FIFO memory 146.

By contrast with this, in the second embodiment of the present disclosure, the event space information stored in the spatial buffer 147 is the polarity information.

Consequently, it is possible to directly acquire the polarity information of an event from the spatial buffer 147, and makes the representative event extraction processing in Fig. 14B efficient. Fig. 23 is a flowchart illustrating a processing operation of the information processing device 1 according to the second embodiment of the present disclosure. In Fig. 23, processing common to those in Fig. 14A will be assigned the same reference numerals, and differences from Fig. 14 will be mainly described.

According to the processing operation in Fig. 23, the polarity information is stored in the spatial buffer 147, so that it is not necessary to store the polarity information $pj+1$ in the FIFO memory 146. Hence, the position $xj+1$ and $yj+1$ and the occurrence time $tj+1$ of the event $ej+1$ are stored as event chronological order information in the FIFO memory 146 (step S83). Consequently, when a new event occurs (steps S11 and S12), the event chronological order information of the event $ei$ extracted from the TAIL of the FIFO memory 146 is the position $xi$ and $yi$ and the occurrence time $ti$ (step S80).

Next, when it is determined that the time stamp $tj+1$ of a new event is outside the range of the time range $\tau$ (YES in step S14), the representative event extraction processing similar to that in Fig. 14B is performed (step S18). Next, the polarity information of the position $(xi, yi)$ of the event $ei$ in the spatial buffer 147 is overwritten to 0, the event space information is deleted (step S81), and the event chronological order information of the event $ei$ is popped from the TAIL in the FIFO memory 146 (step S20). On the other hand, when NO is determined in step S14, whether or not data of the position $(xj+1, yj+1)$ of the event $ej+1$ of the spatial buffer 147 is 0 (step S82). When NO is determined in step S82, the position $xj+1$ and $yj+1$ and the occurrence time $tj+1$ of the event $ej+1$ are stored at the TAIL of the FIFO memory 146 as described above (step S83), and the polarity information $pj+1$ is stored at the position $xj+1$ and $yj+1$ of the spatial buffer 147 (step S84).

Fig. 24 illustrates an example of data that is acquired from the spatial buffer 147 according to the second embodiment of the present disclosure. The spatial buffer 147 stores the polarity information matching a position of an event as event space information. Therefore, when the position of the event is designated and access to the spatial buffer 147 is made, while corresponding polarity information can be acquired, a time stamp (occurrence time information) of an event as illustrated in Fig. 15 cannot be acquired.

Although processing similar to that in Fig. 14B is performed in step S18 in Fig. 23 as described above, the event group E is generated based on data in Fig. 24 read from the spatial buffer 147 in step S32 in Fig. 14B in the second embodiment of the present disclosure. Furthermore, a time stamp of a representative event extracted by the processing in step S40 is an occurrence time of the event $ei$.

As described above, in the second embodiment of the present disclosure, the polarity information is stored as the event space information in the spatial buffer 147, so that it is not necessary to refer to the FIFO memory 146 and acquire event information from the spatial buffer 147, and it is possible to directly acquire the polarity information of an event from the spatial buffer 147. Consequently, it is possible to quickly perform the representative event extraction processing in Fig. 14B, reduce a load of the information processing device 1, and improve a processing speed.

[Third Embodiment]

It is also possible to extract a representative event using only on-events (or off-events) among events occurring in the pixels 20. In this case, the polarity information in the event information generated by the pixel 20 can be omitted. Consequently, it is possible to reduce a storage capacity of the FIFO memory 146 similarly to the second embodiment. Furthermore, in the present embodiment, a representative event is extracted without taking the polarity information into account, so that it is possible to simplify the representative event extraction processing.

In the third embodiment of the present disclosure, event information related to, for example, on-events among events occurring in the pixels 20 is supplied without the polarity information to the event group extraction unit 141. Furthermore, the spatial buffer 147 stores the occurrence time as the event space information, yet does not store the polarity information. In the present embodiment, too, it is possible to directly acquire the event information from the spatial buffer 147 similarly to the second embodiment of the present disclosure.

Fig. 25 is a flowchart illustrating a processing operation of the information processing device 1 according to the third embodiment of the present disclosure. Upon comparison with Fig. 23, in the flowchart in Fig. 25, the position xj+1 and yj+1 and the occurrence time tj+1 are acquired as the event information of the event ej+1 that has newly occurred (step S85). A difference from the first and second embodiments is that the event information does not include the polarity information.

Similarly to the case in Fig. 23, according to the processing operation in Fig. 25, the position xj+1 and yj+1 and the occurrence time tj+1 of the event ej+1 are stored as event chronological order information in the FIFO memory 146 (step S83). Consequently, the event chronological order information of the event ei stored at the TAIL of the FIFO memory 146 is the position xi and yi and the occurrence time ti, so that it is possible to acquire data similar to the event information acquired in step S85 (step S86).

As described above, after the processing in step S83 is finished, the occurrence time tj+1 of the event ej+1 that has newly occurred is stored as the event space information in the spatial buffer 147 (step S87). Fig. 26 illustrates an example of data that can be acquired from the spatial buffer 147 according to the third embodiment of the present disclosure. Occurrence time information of events can be acquired as the event space information from the spatial buffer 147. Furthermore, position information of the events can be acquired from storage locations of the event space information.

The flowchart indicating the detailed processing operation of the representative event extraction processing indicated by step S18 in Fig. 25 is the same as that in Fig. 14B. The event group E is generated based on data in Fig. 25 read from the spatial buffer 147 in step S32 in Fig. 14B in the third embodiment of the present disclosure.

As described above, in the third embodiment of the present disclosure, it is possible to perform the representative event processing using only on-events (or off-events) among events occurring in the pixels 20. Consequently, the polarity information can be omitted from the event information, so that it is possible to reduce the storage capacity of the FIFO memory 146, and simplify the representative event extraction processing.

[Fourth Embodiment]

The information processing device 1 according to the present disclosure can be used for estimation of an own position. Fig. 27 is a view for describing the information processing device 1 according to the fourth embodiment of the present disclosure. Fig. 27 is a view illustrating an example of an own position estimation method that uses the information processing device 1. In Fig. 27, a plurality of light sources are disposed at predetermined positions on a three-dimensional world coordinate system X-Y-Z. The information processing device 1 is disposed at an arbitrary position on the world coordinate system X-Y-Z likewise.

The fourth embodiment according to the present disclosure is applicable to a case where, as illustrated in Fig. 27, there are at least four light sources (e.g., light sources 401 to 404) whose light is incident on the light reception surface 6. The light sources are classified into light sources whose light is incident on the light reception surface 6, and a light source (e.g., light source 405) whose light is not incident on the light reception surface 6 depending on the position and the posture of the information processing device 1. The four light sources 401 to 404 include ID1, ID2, ID3, and ID4 as IDs, respectively. The light sources 401 to 404 transmit information including the respective IDs and employing a data configuration in Fig. 21. The information processing device 1 decodes information (the ID of each light source in this case) included in light transmitted from the light sources 401 to 404 by signal processing similar to that in Fig. 7 (step S90).

Fig. 28 is a view illustrating an example of a decoding result output by the information processing device 1 according to the fourth embodiment of the present disclosure. The decoding result in Fig. 28 conforms to the output format in Fig. 22, and data in Fig. 28 corresponds to the decoded data Di in Fig. 22. The IDs of the light sources 401 to 404, and the positions of the pixels 20 that have received the incident light from the light sources 401 to 404 on a coordinate system x-y-z of the light reception surface 6 can be obtained from the decoding result in Fig. 28.

The light sources 401 to 404 have own position information in advance. The information processing device 1 can acquire positions of the light sources on the world coordinate system X-Y-Z from the IDs of the light sources acquired as the decoding result.

For example, the information processing device 1 can acquire the position x1 and y1 on the coordinate system x-y-z of the light reception surface 6 that has received the incident light from the light source 401, and the decoded data ID1 from the information transmitted from the light source 401. Furthermore, it is possible to obtain a position X1, Y1, and Z1 of the light source 401 from the decoded data ID1.

When a scale of the coordinate system x-y-z of the light reception surface 6 is equal to a scale of the world coordinate system X-Y-Z, a relationship between the position x1 and y1 on the coordinate system x-y-z of the light reception surface 6 that has received the incident light from the light source 401, and the position X1, Y1, and Z1 of the light source 401 can be expressed by a following equation using a rotation matrix R whose size is $3 \times 3$ and a translation matrix T whose size is $3 \times 1$. [RT] in the first term on the right side in equation (1) is a matrix of $4 \times 3$ obtained by synthesizing the rotation matrix R and the moving matrix T.[Math. 1]

The rotation matrix R represents a posture of the information processing device 1 (an orientation of the light reception surface 6). The translation matrix T represents the position of the information processing device 1. It is also possible to acquire a relational expression of light reception positions of incident light on the light reception surface 6 and positions of the light sources that use the rotation matrix R and the translation matrix T for the light sources 402 to 404 likewise. By receiving light from at least four light sources, and acquiring a relationship between the light reception positions of the incident light on the light reception surface 6 and the positions of the light sources according to above equation (1), it is possible to calculate values of the rotation matrix R and the translation matrix T, and estimate the posture and the position of the information processing device 1 (step S91).

The light sources 401 to 404 in Fig. 27 may transmit own coordinates instead of the IDs. Fig. 30 illustrates an example of a decoding result output by the information processing device 1 in a case where the light sources 401 to 404 transmit light including own coordinate information. Consequently, it is possible to estimate the posture and the position of the information processing device 1 in the same way as that in the above-described example. Accordingly, the information processing device 1 does not need to acquire the positions of the light sources 401 to 404 from a data server or the like.

As described above, in the fourth embodiment, by receiving, at four portions on the light reception surface 6 of the information processing device 1, light including identification information or position information of the light sources 401 to 404, it is possible to estimate the posture and the position of the information processing device 1.

[Fifth Embodiment]

The information processing device 1 according to the above-described fourth embodiment of the present disclosure is applicable to various technical fields. The information processing device 1 is also applicable to, for example, a display device that uses Augmented Reality (AR) or Virtual Reality (VR). Fig. 31 illustrates an example of a VR system that includes a display device 7 (e.g., head set) that includes five light sources 411 to 415, and information processing devices 101 and 102 according to the present disclosure. The five light sources 411 to 415 transmit position information of a coordinate system included in the display device 7.

The information processing devices 101 and 102 can estimate own positions and postures in the coordinate system included in the display device 7 from the five light sources 411 to 415. By transmitting the positions and the postures of the information processing devices 101 and 102, the display device 7 can project the positions and the postures of the information processing devices 101 and 102 on a display screen or the like. Alternatively, the display device 7 can control a display image according to the positions and the postures of the information processing devices 101 and 102. A positional relationship between the information processing devices 101 and 102 may be scaled at random.

As described above, the display device 7 including the light sources emits light including information toward the information processing devices 101 and 102 whose positions and postures can be varied at random, and the information processing devices 101 and 102 receive this light, estimate the own positions and postures of the information processing devices 101 and 102 by the processing operation described in the fourth embodiment, and, for example, wirelessly transmit estimation results to the display device 7. Consequently, the display device 7 can perform display matching the positions and the postures of the information processing devices 101 and 102, and display AR or VR images.

[Sixth Embodiment]

The information processing device 1 according to the above-described fourth embodiment of the present disclosure is applicable to, for example, a construction site. Fig. 32 illustrates an example of the construction site at which devices 91 to 96 are disposed. At the construction site, there are various construction machines, work facilities, and the like in addition to workers. In the sixth embodiment, the workers, the construction machines, buildings, and the like include at least one of a light source and the information processing device 1 that receives light from another light source.

Fig. 32 illustrates the six devices 91 to 96 that each include at least one of the light source and the information processing device 1. Fig. 32 illustrates an example where the device 91 is attached to a drone, the device 92 is attached to the worker, the device 93 is attached to the building, the device 94 is attached to a bulldozer, the device 95 is attached to a dump truck, and the device 96 is attached to a truck. This is an example, and types of objects to which these devices are attached, and the number of devices are arbitrary.

Each of the devices 91 to 96 receives light from another device, estimates an own position, and emits light including an own position or own identification information. Consequently, it is possible to grasp the position of each device at the construction site, and grasp a distance between, a direction of, or the like of the devices. For example, the information processing device 1 according to the sixth embodiment can prevent unexpected contact between the devices, or estimate a movement route of each device.

As described above, in the sixth embodiment of the present disclosure, by transmitting and receiving light including some information from light sources between the plurality of devices that exist at the construction site or the like, each device can specify the own position and estimate the movement route of each device even when a management server does not exist.

[Application Example]

The technique according to the present disclosure can be applied to various products. For example, the technique according to the present disclosure may be implemented as an apparatus mounted on any kind of mobile body such as an automobile, an electric vehicle, a hybrid electric vehicle, a motorcycle, a bicycle, a personal mobility, an airplane, a drone, a ship, a robot, a construction machine, or an agricultural machine (tractor).

Fig. 33 is a block diagram illustrating a schematic configuration example of a vehicle control system 7000 that is an example of a mobile body control system to which the technique according to the present disclosure is applicable. The vehicle control system 7000 includes a plurality of electronic control units connected via a communication network 7010. In the example illustrated in Fig. 33, the vehicle control system 7000 includes a drive system control unit 7100, a body system control unit 7200, a battery control unit 7300, a vehicle exterior information detection unit 7400, a vehicle interior information detection unit 7500, and an integrated control unit 7600. The communication network 7010 connecting the plurality of these control units may be, for example, an in-vehicle communication network compliant with any standards such as a Controller Area Network (CAN), a Local Interconnect Network (LIN), LAN (Local Area Network), and FlexRay (registered trademark).

Each control unit includes a microcomputer that performs arithmetic processing according to various programs, a storage unit that stores programs executed by the microcomputer, parameters used for various arithmetic operations, and the like, and a drive circuit that drives various control target devices. Each control unit includes a network I/F for performing communication with other control units via the communication network 7010, and includes a communication I/F for performing communication through wired communication or wireless communication with devices, sensors, or the like inside or outside the vehicle. Fig. 33 illustrates a microcomputer 7610, a general-purpose communication I/F 7620, a dedicated communication I/F 7630, a positioning unit 7640, a beacon reception unit 7650, an in-vehicle device I/F 7660, an audio/image output unit 7670, an in-vehicle network I/F 7680, and a storage unit 7690 as a functional configuration of the integrated control unit 7600. Other control units also include a microcomputer, a communication I/F, a storage unit, and the like likewise.

The drive system control unit 7100 controls the operations of devices related to the drive system of the vehicle according to various programs. For example, the drive system control unit 7100 functions as a control device for a driving force generation device for generating a vehicle driving force of an internal combustion engine or a drive motor, a driving force transmission mechanism for transmitting the driving force to wheels, a steering mechanism for adjusting a steering angle of the vehicle, a braking device that generates a braking force of the vehicle. The drive system control unit 7100 may have a function as a control device, for example, an Antilock Brake System (ABS) or Electronic Stability Control (ESC).

The drive system control unit 7100 is connected with a vehicle state detection unit 7110. The vehicle state detection unit 7110 includes at least one of, for example, a gyro sensor that detects an angular velocity of an axial rotation motion of a vehicle body, an acceleration sensor that detects an acceleration of a vehicle, and sensors for detecting an amount of operation with respect to an accelerator pedal, an amount of operation with respect to a brake pedal, a steering angle of a steering wheel, an engine speed, a rotation speed of wheels, and the like. The drive system control unit 7100 performs arithmetic processing using a signal input from the vehicle state detection unit 7110 to control an internal combustion engine, a drive motor, an electric power steering device, a brake device, and the like.

The body system control unit 7200 controls operations of various devices equipped to the vehicle body according to various programs. For example, the body system control unit 7200 functions as a control device of a keyless entry system, a smart key system, a power window device, or various lamps such as a head lamp, a back lamp, a brake lamp, a turn indicator, and a fog lamp. In this case, the body system control unit 7200 can receive input of radio waves emitted from a portable device in place of a key or signals of various switches. The body system control unit 7200 receives inputs of radio waves or signals and controls a door lock device, a power window device, and a lamp of the vehicle.

The battery control unit 7300 controls a secondary battery 7310 that is a power supply source of a driving motor according to various programs. For example, the battery control unit 7300 receives from a battery device including the secondary battery 7310 input of information such as a battery temperature, a battery output voltage, or a remaining capacity of a battery. The battery control unit 7300 performs arithmetic processing using such a signal and performs temperature adjustment control of the secondary battery 7310 or control of a cooling device equipped to the battery device.

The vehicle exterior information detection unit 7400 detects information on an outside of the vehicle in which the vehicle control system 7000 is mounted. For example, the vehicle exterior information detection unit 7400 is connected with at least one of an imaging unit 7410 and a vehicle exterior information detector 7420. The imaging unit 7410 includes at least one of a Time Of Flight (ToF) camera, a stereo camera, a monocular camera, an infrared camera, and other cameras. The vehicle exterior information detector 7420 includes at least one of, for example, an environmental sensor for detecting a current weather or atmospheric phenomenon and a surrounding information detection sensor for detecting other vehicles, obstacles, or pedestrians, or the like around the vehicle in which the vehicle control system 7000 is mounted.

The environmental sensor may be at least one of, for example, a raindrop sensor that detects rainy weather, a fog sensor that detects fog, a sunshine sensor that detects the degree of sunshine, and a snow sensor that detects snowfall. The surrounding information detection sensor may be at least one of an ultrasonic sensor, a radar device, and a Light Detection And Ranging or Laser Imaging Detection And Ranging (LIDAR) device. The imaging unit 7410 and the vehicle exterior information detector 7420 may be provided as independent sensors or devices or may be provided as a device in which a plurality of sensors or devices are integrated.

Here, Fig. 34 illustrates an example of installation positions of the imaging unit 7410 and the vehicle exterior information detector 7420. Imaging units 7910, 7912, 7914, 7916, and 7918 are provided at at least one position of, for example, a front nose, a side mirror, a rear bumper, a back door, and an upper part of a windshield of a vehicle cabin of a vehicle 7900. The imaging unit 7910 equipped to the front nose and the imaging unit 7918 equipped at the upper part of the windshield in the vehicle cabin mainly acquire an image of the front of the vehicle 7900. The imaging units 7912 and 7914 equipped to the side mirrors mainly acquire images of the side of the vehicle 7900. The imaging unit 7916 equipped to the rear bumper or the back door mainly acquires an image of the rear of the vehicle 7900. The imaging unit 7918 equipped at the upper part of the windshield in the vehicle cabin is mainly used for detection of a preceding vehicle, a pedestrian, an obstacle, a traffic light, a traffic sign, a lane, or the like.

Note that Fig. 34 illustrates an example of imaging ranges of the respective imaging units 7910, 7912, 7914, and 7916. An imaging range a indicates an imaging range of the imaging unit 7910 provided to the front nose, imaging ranges b and c indicate imaging ranges of the imaging units 7912 and 7914 provided to the side mirrors, and an imaging range d indicates an imaging range of the imaging unit 7916 provided to the rear bumper or the back door. By, for example, superimposing the image data captured by the imaging units 7910, 7912, 7914, and 7916, it is possible to obtain a bird's-eye view image of the vehicle 7900 as viewed from above.

Vehicle exterior information detection units 7920, 7922, 7924, 7926, 7928, and 7930 provided in a front, a rear, a side, a corner, and an upper part of the windshield in the vehicle cabin of the vehicle 7900 may be, for example, ultrasonic sensors or radar devices. The vehicle exterior information detection units 7920, 7926, and 7930 provided at the front nose, the rear bumper, the back door, and the upper part of the windshield in the vehicle cabin of the vehicle 7900 may be, for example, LIDAR devices. These vehicle exterior information detection units 7920 to 7930 are mainly used for detection of a preceding vehicle, a pedestrian, an obstacle, or the like.

Returning to Fig. 33, the description will be continued. The vehicle exterior information detection unit 7400 causes the imaging unit 7410 to capture an image of the outside of the vehicle and receives captured image data. Furthermore, the vehicle exterior information detection unit 7400 receives detection information from the connected vehicle exterior information detector 7420. In a case where the vehicle exterior information detector 7420 is an ultrasonic sensor, a radar device, or a LIDAR device, the vehicle exterior information detection unit 7400 causes the vehicle exterior information detector 7420 to transmit ultrasonic waves, electromagnetic waves, or the like, and receives information of the received reflected wave. The vehicle exterior information detection unit 7400 may perform object detection processing or distance detection processing for a person, a vehicle, an obstacle, a sign, a character on a road surface, or the like based on the received information. The vehicle exterior information detection unit 7400 may perform environment recognition processing for recognizing rainfall, fog, road surface situation, and the like based on the received information. The vehicle exterior information detection unit 7400 may calculate a distance to an object outside the vehicle based on the received information.

Furthermore, the vehicle exterior information detection unit 7400 may perform image recognition processing or distance detection processing for recognizing a person, a vehicle, an obstacle, a sign, a character on a road surface, or the like based on the received image data. The vehicle exterior information detection unit 7400 may perform processing such as distortion correction or alignment on the received image data, and combine image data captured by the different imaging units 7410 to generate a bird's-eye view image or a panoramic image. The vehicle exterior information detection unit 7400 may perform viewpoint conversion processing using the image data captured by the different imaging units 7410.

The vehicle interior information detection unit 7500 detects information on an inside of the vehicle. The vehicle interior information detection unit 7500 is connected with, for example, a driver state detection unit 7510 that detects a driver's state. The driver state detection unit 7510 may include a camera that images a driver, a biological sensor that detects biological information of the driver, or a microphone that collects a sound in the vehicle cabin. The biological sensor is provided to, for example, a seat surface, a steering wheel, or the like, and detects biological information of a passenger sitting on the seat or the driver holding the steering wheel. The vehicle interior information detection unit 7500 may calculate the degree of fatigue or the degree of concentration of the driver or determine whether or not the driver is drowsing based on detection information input from the driver state detection unit 7510. The vehicle interior information detection unit 7500 may perform noise cancellation processing or the like on a collected sound signal.

The integrated control unit 7600 controls overall operations in the vehicle control system 7000 according to various programs. The integrated control unit 7600 is connected with an input unit 7800. The input unit 7800 is implemented by a device such as a touch panel, a button, a microphone, a switch, or a lever that can be operated for the input by a passenger. The integrated control unit 7600 may receive input of data obtained by recognizing voice input through a microphone. The input unit 7800 may be, for example, a remote control device using infrared rays or other radio waves, or may be an externally connected device such as a mobile phone or a Personal Digital Assistant (PDA) that supports an operation on the vehicle control system 7000. The input unit 7800 may be, for example, a camera, and, in this case, the passenger can input information by gesture thereto. Alternatively, the input unit 7800 may receive input of data obtained by detecting a motion of a wearable device worn by the passenger. Furthermore, the input unit 7800 may include, for example, an input control circuit that generates an input signal based on information input by the passenger or the like using the above input unit 7800 and outputs the input signal to the integrated control unit 7600. The passenger or the like inputs various types of data to the vehicle control system 7000 or instructs a processing operation by operating this input unit 7800.

The storage unit 7690 may include a Read Only Memory (ROM) that stores various programs to be executed by a microcomputer, and a Random Access Memory (RAM) that stores various parameters, arithmetic operation results, or sensor values or the like. Furthermore, the storage unit 7690 may be implemented by, for example, a magnetic storage device such as a Hard Disc Drive (HDD), a semiconductor storage device, an optical storage device, or a magneto-optical storage device.

The general-purpose communication I/F 7620 is a general-purpose communication I/F that mediates communication with various devices present in an external environment 7750. The general-purpose communication I/F 7620 may have, implemented therein, a cellular communication protocol such as Global System of Mobile (GSM) communications (registered trademark), WiMAX (registered trademark), Long Term Evolution (LTE) (registered trademark), or LTE-Advanced (LTE-A), or other wireless communication protocols such as wireless LAN (also referred to as Wi-Fi (registered trademark)) or Bluetooth (registered trademark). The general-purpose communication I/F 7620 may be connected to, for example, a device (e.g., an application server or a control server) present on an external network (e.g., the Internet, a cloud network, or a business-specific network) via a base station or an access point. Furthermore, the general-purpose communication I/F 7620 may be connected to terminals (e.g., the terminals of the driver, pedestrians, or shops, or Machine-Type Communication (MTC) terminals) near the vehicle by using, for example, the Peer-To-Peer (P2P) technique.

The dedicated communication I/F 7630 is a communication I/F that supports a communication protocol formulated for the purpose of use in a vehicle. The dedicated communication I/F 7630 may implement, for example, a standard protocol such as a Wireless Access in Vehicle Environment (WAVE) that is a combination of IEEE802. 11p of a lower layer and IEEE1609 of an upper layer, a Dedicated Short Range Communications (DSRC), or a cellular communication protocol. The dedicated communication I/F 7630 typically performs V2X communications as a concept including one or more of vehicle-to-vehicle communications, vehicle-to-infrastructure communications, vehicle-to-home communications, and vehicle-to-pedestrian communications.

The positioning unit 7640 receives, for example, a Global Navigation Satellite System (GNSS) signal from a GNSS satellite (e.g., a GPS signal from a Global Positioning System (GPS) satellite), executes positioning, and generates position information including a latitude, a longitude, and an altitude of the vehicle. Note that the positioning unit 7640 may specify a current position by exchanging signals with a wireless access point, or may acquire position information from a terminal such as a mobile phone, a PHS, or a smartphone having a positioning function.

The beacon reception unit 7650 receives radio waves or electromagnetic waves transmitted from a radio station or the like installed on a road, and acquires information such as a current position, traffic jam, no throughfare, or a required time. Note that the function of the beacon reception unit 7650 may be included in the above-described dedicated communication I/F 7630.

The in-vehicle device I/F 7660 is a communication interface that mediates connections between the microcomputer 7610 and various in-vehicle devices 7760 present in the vehicle. The in-vehicle device I/F 7660 may establish wireless connection using wireless communication protocols such as a wireless LAN, Bluetooth (registered trademark), Near Field Communication (NFC), and Wireless USB (WUSB). Furthermore, the in-vehicle device I/F 7660 may establish wired connection of, for example, a Universal Serial Bus (USB), High-Definition Multimedia Interface (HDMI) (registered trademark), or Mobile High-definition Link (MHL) via a connection terminal (not illustrated) (and a cable if necessary). The in-vehicle device 7760 may include at least one of, for example, a mobile device or a wearable device of a passenger and an information device carried in or attached to the vehicle. Furthermore, the in-vehicle device 7760 may include a navigation device that searches for a route to an arbitrary destination. The in-vehicle device I/F 7660 exchanges control signals or data signals with these in-vehicle devices 7760.

The in-vehicle network I/F 7680 is an interface that mediates communication between the microcomputer 7610 and the communication network 7010. The in-vehicle network I/F 7680 transmits and receives signals or the like in conformity with a predetermined protocol supported by the communication network 7010.

The microcomputer 7610 of the integrated control unit 7600 controls the vehicle control system 7000 according to various programs based on information acquired through at least one of the general-purpose communication I/F 7620, the dedicated communication I/F 7630, the positioning unit 7640, the beacon reception unit 7650, the in-vehicle device I/F 7660, and the in-vehicle network I/F 7680. For example, the microcomputer 7610 may calculate control target values for a driving force generation device, a steering mechanism, or a braking device based on acquired information on the inside and the outside of the vehicle, and output control commands to the drive system control unit 7100. For example, the microcomputer 7610 may perform cooperative control for the purpose of implementing the functions of an Advanced Driver Assistance System (ADAS) including vehicle collision avoidance or impact mitigation, follow-up traveling based on an inter-vehicle distance, vehicle speed maintenance driving, a vehicle collision warning, and a vehicle lane departure warning. Furthermore, the microcomputer 7610 may perform coordinated control for the purpose of automated driving of performing autonomous traveling without depending on an operation of a driver by controlling, for example, a driving force generation device, a steering mechanism, or a braking device based on acquired information on the surroundings of the vehicle.

The microcomputer 7610 may generate three-dimensional distance information between the vehicle and objects such as structures or people in the surroundings based on information acquired via at least one of the general-purpose communication I/F 7620, the dedicated communication I/F 7630, the positioning unit 7640, the beacon reception unit 7650, the in-vehicle device I/F 7660, and the in-vehicle network I/F 7680, and generate local map information including surroundings information of a current position of the vehicle. Furthermore, the microcomputer 7610 may predict a danger such as collision of the vehicle, approach of a pedestrian, or entry into a traffic prohibition road based on the acquired information, and generate a warning signal. The warning signal may be, for example, a signal for generating a warning sound or turning on a warning lamp.

The audio/image output unit 7670 transmits output signals of at least one of the audio and images to an output device capable of visually or audibly notifying a passenger of the vehicle or the outside of the vehicle of information. The example in Fig. 33 illustrates an audio speaker 7710, a display unit 7720, and an instrument panel 7730 as output devices. For example, the display unit 7720 may include at least one of an on-board display and a head-up display. The display unit 7720 may have an Augmented Reality (AR) display function. The output device may be other devices such as a headphone, a wearable device such as a glasses-type display worn by a passenger, a projector, and a lamp. When the output device is a display device, the display device visually displays results obtained through various processing performed by the microcomputer 7610 or information received from another control unit in various formats such as text, images, tables, and graphs. Furthermore, when the output device is an audio output device, the audio output device converts an audio signal including reproduced sound data, acoustic data, or the like into an analog signal and outputs the analog signal auditorily.

Note that, in the example illustrated in Fig. 33, at least two control units connected via the communication network 7010 may be integrated as one control unit. Alternatively, each control unit may include a plurality of control units. Furthermore, the vehicle control system 7000 may include unillustrated another control unit. Furthermore, in the above description, the other control unit may have some or all of functions of any one of the control units. That is, predetermined arithmetic processing may be performed by any one of the control units as long as information is transmitted and received via the communication network 7010. Similarly, a sensor or a device connected to any one of the control units may be connected to the other control unit, and a plurality of control units may transmit or receive detection information to and from each other via the communication network 7010.

Note that a computer program for implementing each function of the information processing device 1 according to the present embodiment described with reference to Fig. 10 can be mounted in any control unit or the like. Furthermore, it is also possible to provide a computer-readable recording medium in which such a computer program has been stored. The recording medium is, for example, a magnetic disk, an optical disc, a magneto-optical disc, or a flash memory. Furthermore, the above computer program may be distributed via, for example, a network without using the recording medium.

In the vehicle control system 7000 described above, the information processing device 1 according to the present embodiment described with reference to Fig. 10 can be applied to the integrated control unit 7600 of the application example illustrated in Fig. 33. For example, the event group extraction unit 141, the representative event extraction unit 142, the time difference detection unit 143, and the information processing unit 144 of the information processing device 1 correspond to the microcomputer 7610 of the integrated control unit 7600. Furthermore, the FIFO memory 146, the spatial buffer 147, and the tracking list storage unit 145 correspond to the storage unit 7690 of the integrated control unit 7600.

Furthermore, at least part of components of the information processing device 1 described with reference to Fig. 10 may be implemented in a module for the integrated control unit 7600 illustrated in Fig. 33 (e.g., an integrated circuit module including one die). Alternatively, the information processing device 1 described with reference to Fig. 10 may be implemented by the plurality of control units of the vehicle control system 7000 illustrated in Fig. 33.

Note that the present technique can also take on the following configurations.

(1) An information processing device includes:

a plurality of photoelectric conversion elements that each photoelectrically convert incident light and generate an electrical signal;
an event detection unit that detects an event that occurs based on a change amount of the electrical signal of each of the plurality of photoelectric conversion elements;
an event group extraction unit that extracts an event group including a plurality of temporally and spatially close events based on the event detected within a predetermined time range; and
a representative event extraction unit that extracts a representative event representing the plurality of events included in the event group.

(2) In the information processing device described in (1),

the plurality of photoelectric conversion elements are able to receive the incident light including information, and
the information processing device further includes an information processing unit that decodes the information based on the representative event.

(3) The information processing device described in (2) further includes a time difference detection unit that detects a time difference between a new representative event extracted by the representative event extraction unit, and an other representative event that is close to the new representative event and has already been extracted, and
the information processing unit decodes the information based on the time difference.

(4) In the information processing device described in (3),

the event detection unit detects position information of the event and information of a time at which the event has occurred, and
the time difference detection unit detects the time difference from an other representative event that is temporally or spatially the closest to the new representative event among a plurality of the other representative events.

(5) In the information processing device described in (4),

the representative event extraction unit extracts position information of the representative event, information of a time at which the representative event has occurred, and range information of the event group to which the representative event belongs, and
the other representative event includes time information different from a time range included in the range information of the new representative event.

(6) In the information processing device described in (5), the other representative event includes information of a position within a position range included in the range information of the new representative event.

(7) In the information processing device described in (3),

the event detection unit detects position information of the event, information of a time at which the event has occurred, and polarity information indicating a change direction of the change amount of the electrical signal, and
the time difference detection unit detects the time difference from an other representative event that includes polarity information different from polarity information of the new representative event and is temporally or spatially the closest to the new representative event among a plurality of the other representative events.

(8) In the information processing device described in (7),

the representative event extraction unit extracts position information of the representative event, information of a time at which the representative event has occurred, polarity information of the representative event, and range information of the event group to which the representative event belongs, and

the other representative event includes time information different from a time range included in the range information of the new representative event.

(9) In the information processing device described in (8), the other representative event includes information of a position within a position range included in the range information of the new representative event.

(10) In the information processing device described in any one of (3) to (9), the information processing unit generates decoded data including a plurality of bits included in the information based on a plurality of the time differences repeatedly detected by the time difference detection unit, and outputs the decoded data and output data including timing information and position information of the representative event.

(11) In the information processing device described in (10), the information processing unit determines based on a time length of the time difference whether the time difference indicates start bit information or indicates a specific bit value of the decoded data.

(12) The information processing device described in any one of (3) to (11) further includes a first storage unit that stores information related to the representative event extracted by the representative event extraction unit, and

the information processing unit adds information to the first storage unit or updates the information stored in the first storage unit every time the representative event extraction unit newly extracts a representative event.

(13) The information processing device described in (10) further includes a first storage unit that stores first data including position information of the representative event, timing information, bit count information of the decoded data, and the decoded data per representative event extracted by the representative event extraction unit,

the time difference detection unit reads from the first storage unit the first data of the new representative event and the first data of the other representative event, and detects the time difference, and

the information processing unit adds the first data to the first storage unit or updates the first data stored in the first storage unit every time the representative event extraction unit newly extracts a representative event.

(14) In the information processing device described in (13), the first data includes polarity information.

(15) The information processing device described in any one of (1) to (14) further includes a second storage unit that stores second data related to an occurrence time of the event in chronological order, and

the event group extraction unit extracts the event group based on the second data having occurred within the predetermined time range among items of the second data stored in the second storage unit.

(16) In the information processing device described in (15), the second data includes information of a time and information of a position at which the event that has occurred.

(17) In the information processing device described in (16) or (17), the representative event extraction unit deletes the second data that has been stored for a longest time among a plurality of items of the second data stored in the second storage unit every time the representative event is extracted.

(18) The information processing device described in any one of (1) to (17) further includes a third storage unit that associates third data related to the event with a spatial position at which the event has been detected to store, and

the representative event extraction unit extracts the representative event based on the third data stored in the third storage unit.

(19) The information processing device described in any one of (15) to (17) further includes a third storage unit that associates third data related to the event with a spatial position at which the event has been detected to store, and

the representative event extraction unit extracts the representative event based on the third data stored in the third storage unit, and

the third data includes at least one of address information of the second data, polarity information indicating a plus or minus sign of the change amount of the electrical signal of the event, and information of a timing at which the event has occurred.

(20) According to an information processing method,

a plurality of photoelectric conversion elements that each photoelectrically convert incident light and generate an electrical signal can receive the incident light including information, and

the information processing method includes at the plurality of photoelectric conversion elements:

detecting an event that has occurred based on the electrical signal;

extracting an event group including a plurality of temporally and spatially close events based on the event detected within the predetermined time range;

extracting a representative event representing the plurality of events included in the event group; and

decoding the information based on the representative event.

Aspects of the present disclosure are not limited to the aforementioned individual embodiments and include various modifications that those skilled in the art can achieve, and effects of the present disclosure are also not limited to the details described above. In other words, various additions, modifications, and partial deletion can be made without departing from the conceptual idea and the gist of the present disclosure that can be derived from the contents defined in the claims and the equivalents thereof.

[Reference Signs List]

1, 101, 102 Information processing device

2 Pixel chip

4, 401, 402, 403, 404, 405, 411, 412, 413, 414, 415 Light source

5, 51 Event stream

6 Light receiving surface

7 Display device

11 Pixel array unit12Control circuit

13 Arbiter

14 Signal processing unit

20 Pixel

21 Logarithmic response unit

22 Buffer

23 Differentiation circuit

24 Comparator

61 Range

91, 92, 93, 94, 95, 96 Device

141 Event group extraction unit

142 Representative event extraction unit

143 Time difference detection unit

144 Information processing unit

145 Tracking list storage unit

146 FIFO memory

147 Spatial buffer

210 Current/voltage conversion unit

211 Photoelectric conversion element

212, 214, 215, 221, 222, 232, 233, 235, 241, 242, 243, 244 Transistor

213, 231, 234 Capacitor

216, 236 Input node

217, 223, 237 Output node

**Claims**

1. An information processing device comprising:

   a plurality of photoelectric conversion elements that each photoelectrically convert incident light and generate an electrical signal;
   an event detection unit that detects an event that occurs based on a change amount of the electrical signal of each of the plurality of photoelectric conversion elements;
   an event group extraction unit that extracts an event group including a plurality of temporally and spatially close events based on the event detected within a predetermined time range; and
   a representative event extraction unit that extracts a representative event representing the plurality of events included in the event group.

2. The information processing device according to claim 1, wherein

   the plurality of photoelectric conversion elements are able to receive the incident light including information, and
   the information processing device further comprises an information processing unit that decodes the information based on the representative event.

3. The information processing device according to claim 2, further comprising a time difference detection unit that detects a time difference between a new representative event extracted by the representative event extraction unit, and an other representative event that is close to the new representative event and has already been extracted, wherein the information processing unit decodes the information based on the time difference.

4. The information processing device according to claim 3, wherein

the event detection unit detects position information of the event and information of a time at which the event has occurred, and the time difference detection unit detects the time difference from an other representative event that is temporally or spatially the closest to the new representative event among a plurality of the other representative events.

5. The information processing device according to claim 4, wherein

the representative event extraction unit extracts position information of the representative event, information of a time at which the representative event has occurred, and range information of the event group to which the representative event belongs, and the other representative event includes time information different from a time range included in the range information of the new representative event.

6. The information processing device according to claim 5, wherein the other representative event includes information of a position within a position range included in the range information of the new representative event.

7. The information processing device according to claim 3, wherein

the event detection unit detects position information of the event, information of a time at which the event has occurred, and polarity information indicating a change direction of the change amount of the electrical signal, and the time difference detection unit detects the time difference from an other representative event that includes polarity information different from polarity information of the new representative event and is temporally or spatially the closest to the new representative event among a plurality of the other representative events.

8. The information processing device according to claim 7, wherein

the representative event extraction unit extracts position information of the representative event, information of a time at which the representative event has occurred, polarity information of the representative event, and range information of the event group to which the representative event belongs, and the other representative event includes time information different from a time range included in the range information of the new representative event.

9. The information processing device according to claim 8, wherein the other representative event includes information of a position within a position range included in the range information of the new representative event.

10. The information processing device according to claim 3, wherein the information processing unit generates decoded data including a plurality of bits included in the information based on a plurality of the time differences repeatedly detected by the time difference detection unit, and outputs the decoded data and output data including timing information and position information of the representative event.

11. The information processing device according to claim 10, wherein the information processing unit determines based on a time length of the time difference whether the time difference indicates start bit information or indicates a specific bit value of the decoded data.

12. The information processing device according to claim 3, further comprising a first storage unit that stores information related to the representative event extracted by the representative event extraction unit, wherein the information processing unit adds information to the first storage unit or updates the information stored in the first storage unit every time the representative event extraction unit newly extracts a representative event.

13. The information processing device according to claim 10, further comprising a first storage unit that stores first data including position information of the representative event, timing information, bit count information of the decoded data, and the decoded data per representative event extracted by the representative event extraction unit, wherein

the time difference detection unit reads from the first storage unit the first data of the new representative event and the first data of the other representative event, and detects the time difference, and

the information processing unit adds the first data to the first storage unit or updates the first data stored in the first storage unit every time the representative event extraction unit newly extracts a representative event.

14. The information processing device according to claim 13, wherein the first data includes polarity information.

15. The information processing device according to claim 1, further comprising a second storage unit that stores second data related to an occurrence time of the event in chronological order, wherein the event group extraction unit extracts the event group based on the second data having occurred within the predetermined time range among items of the second data stored in the second storage unit.

16. The information processing device according to claim 15, wherein the second data includes information of a time and information of a position at which the event that has occurred.

17. The information processing device according to claim 16, wherein the representative event extraction unit deletes the second data that has been stored for a longest time among a plurality of items of the second data stored in the second storage unit every time the representative event is extracted.

18. The information processing device according to claim 1, further comprising a third storage unit that associates third data related to the event with a spatial position at which the event has been detected to store, wherein the representative event extraction unit extracts the representative event based on the third data stored in the third storage unit.

19. The information processing device according to claim 15, further comprising a third storage unit that associates third data related to the event with a spatial position at which the event has been detected to store, wherein

the representative event extraction unit extracts the representative event based on the third data stored in the third storage unit, and the third data includes at least one of address information of the second data, polarity information indicating a plus or minus sign of the change amount of the electrical signal of the event, and information of a timing at which the event has occurred.

20. An information processing method, wherein

a plurality of photoelectric conversion elements that each photoelectrically convert incident light and generate an electrical signal can receive the incident light including information, and the information processing method comprises at the plurality of photoelectric conversion elements:

detecting an event that has occurred based on the electrical signal;
extracting an event group including a plurality of temporally and spatially close events based on the event detected within a predetermined time range;
extracting a representative event representing the plurality of events included in the event group; and
decoding the information based on the representative event.

Fig. 1

Fig. 2

Fig. 3

COMPARATOR OUTPUT LEVEL

COMP+

COMP-

$V_{high}$    $V_{low}$    COMPARATOR INPUT LEVEL

UNIT CHANGE AMOUNT（＋）    UNIT CHANGE AMOUNT（－）
CHANGE AMOUNT（＋）    CHANGE AMOUNT（－）

Fig. 4

1

PIXEL CHIP 2

CIRCUIT CHIP 3

Fig. 5

Fig. 6

Fig. 7

```
                    ┌─────────────────┐
                    │     START       │
                    └─────────────────┘
                             │
                             ▼
        ┌─────────────────────────────────┐
        │        DETECT EVENT             │──── S1
        └─────────────────────────────────┘
                             │
                             ▼
        ┌─────────────────────────────────┐
        │     CALCULATE EVENT GROUP       │──── S2
        └─────────────────────────────────┘
                             │
                             ▼
        ┌─────────────────────────────────┐
        │   CALCULATE REPRESENTATIVE      │──── S3
        │           EVENT                 │
        └─────────────────────────────────┘
                             │
                             ▼
        ┌─────────────────────────────────┐
        │  CALCULATE TIME DIFFERENCE      │
        │  BETWEEN NEWLY EXTRACTED        │──── S4
        │  REPRESENTATIVE EVENT, AND      │
        │  ALREADY EXTRACTED RELATED      │
        │  REPRESENTATIVE EVENT           │
        └─────────────────────────────────┘
                             │
                             ▼
        ┌─────────────────────────────────┐
        │  EXTRACT INFORMATION FROM       │──── S5
        │      TIME DIFFERENCE            │
        └─────────────────────────────────┘
                             │
                             ▼
                    ┌─────────────────┐
                    │      END        │
                    └─────────────────┘
```

Fig. 8

rj (xj, yj, tj, pj, bbox)

bbox (xmin, xmax, ymin, ymax, tmin, tmax)

ei (xi, yi, ti, pi)

G

51

Fig. 9A

Fig. 9B

Fig. 10

SIGNAL PROCESSING UNIT

14

146 FIFO Memory

141 EVENT GROUP EXTRACTION UNIT

147 SPATIAL BUFFER

142 REPRESENTATIVE EVENT EXTRACTION UNIT

145 TRACKING LIST STORAGE UNIT

143 TIME DIFFERENCE DETECTION UNIT

144 INFORMATION PROCESSING UNIT

11
20
PIXEL ARRAY UNIT

211 PIXEL

PHOTOELECTRIC CONVERSION ELEMENT

COMPARATOR

24

37

Fig. 11

Fig. 12

Fig. 13A

Fig. 13B

Fig. 13C

Fig. 13D

TAIL     HEAD    146

$e_j$-4 | $e_j$-3 ⟸ $e_j$-2 | $e_j$-1 | $e_j$ ⟸ $e_j$+1

$P_1$   $P_2$   $P_4$   G

147

E'

$P_3$

Fig. 13E

Fig. 13F

Fig. 14A

```
                    ┌─────────────┐
                    │    START    │
                    └──────┬──────┘
                           │                    S11
                    ┌──────▼───────┐
           ┌───────►│WAIT FOR EVENT│◄──────────────────────┐
           │        └──────┬───────┘                        │
           │               │                                │
           │    ┌──────────▼──────────────┐   S12           │
           │    │ e_{j+1} = (x_{j+1}, y_{j+1}, p_{j+1}, t_{j+1}) │           │
           │    └──────────┬──────────────┘                 │
           │    ┌──────────▼──────────────┐   S13           │
  ┌────────┼───►│ e_i = (x_i, y_i, p_i, t_i) ⇐ FIFO[TAIL] │           │
  │        │    └──────────┬──────────────┘                 │
  │        │               │              S14               │
  │        │      YES   ┌───▼────┐   NO                     │
  │        │    ┌──────◄│t_i < t_{j+1} − τ│►──────┐         │
  │        │    │       └────────┘        │       │         │
  │        │ S18│                         │       │  S15    │
  │        │ ┌──▼──────────────────┐      │   ┌───▼────┐ YES│
  │        │ │     EXTRACT         │      │   │Spatial[x_{j+1}, y_{j+1}]│───┐
  │        │ │REPRESENTATIVE EVENT │      │   │  ≠ NULL │   │
  │        │ └──┬──────────────────┘      │   └───┬────┘   │
  │        │ S19│                         │    NO │   S16  │
  │        │ ┌──▼──────────────────┐      │  ┌────▼──────┐ │
  │        │ │Spatial[x_i, y_i] = NULL│      │  │FIFO.pushRight(e_{j+1})│  S17
  │        │ └──┬──────────────────┘      │  └────┬──────┘ │
  │        │ ┌──▼──────────────────┐  S20 │  ┌────▼──────────────┐
  │        │ │  FIFO.popLeft()     │      │  │a = address(FIFO[HEAD])│
  │        │ └──┬──────────────────┘      │  │Spatial[x_{j+1}, y_{j+1}] = a│
  │        └────┘                         │  └────┬──────────────┘
  └──────────────────────────────────────┘       │
                                                  └──────────┘
```

46

Fig. 14B

```
                        ┌─────────┐
                        │  START  │
                        └────┬────┘
                             │                          S31
                             ▼                     ╱──────
                    ╱─────────────────╲        NO
                   ╱ Spatial[xⱼ,yⱼ]!=NULL ╲──────────────────────────┐
                    ╲─────────────────╱                              │
                             │                                       │
                            YES                                      │
                             ▼                                       │
              ┌──────────────────────────────┐     S32              │
              │ E = neighbourhood(Spatial[xᵢ,yᵢ]) │──                │
              └──────────────┬───────────────┘                      │
                             │              S33                      │
                             ▼          ╱──────                      │
                    ╱─────────────────╲     NO                       │
                   ╱    N(E) > E_MIN     ╲──────────────────────────┤
                    ╲─────────────────╱                              │
                             │                                       │
                            YES                                      │
                             ▼                                       │
                    ┌──────────────────┐                            │
                    │      G = eᵢ        │    S34                    │
                    │ Spatial[xᵢ,yᵢ]=NULL│──                         │
                    └─────────┬─────────┘                           │
                             │                                       │
                             ▼                                       │
  S38      ┌──────────────────────────────────┐  S35               │
   ╲       │          G.append(E)              │──                   │
    ┌──────▶│   Spatial[E(x),E(y)] = NULL       │    S36            │
    │      └──────────────┬───────────────────┘  ╱──                │
    │                     ▼                                          │
 ┌──────┐  ┌──────────────────────────────────────┐                 │
 │E ⇐ E'│  │ E' = neighbourhood(Spatial[E(x),E(y)]) │                │
 └──────┘  └──────────────┬───────────────────────┘                 │
    ▲                     │                   S37                    │
    │      YES            ▼               ╱──────                    │
    └──────────────╱─────────────────╲                              │
                  ╱    N(E) ≧ E_MIN     ╲                            │
                   ╲─────────────────╱                              │
                             │                                       │
                            NO                 S39                   │
                             ▼             ╱──────                   │
                    ╱─────────────────╲       NO                     │
                   ╱    N(G) > G_MIN     ╲──────────────────────────┤
                    ╲─────────────────╱                              │
                             │                                       │
                            YES             S40                      │
                             ▼          ╱──                          │
                    ┌──────────────────┐                    ┌───────▼──┐
                    │  r = aggregate(G) │───────────────────▶│   END   │
                    └──────────────────┘                    └──────────┘
```

Fig. 15

| POSITION | | POLARITY | TIME STAMP |
|---|---|---|---|
| $x_1$ | $y_1$ | on | $t_1$ |
| $x_2$ | $y_2$ | off | $t_3$ |
| $x_3$ | $y_3$ | on | $t_5$ |
| | | | |

Fig. 16

| POSITION | | POLARITY | TIME STAMP | bbox |
|---|---|---|---|---|
| $x_1$ | $y_1$ | on | $t_1$ | $bbox_1$ |
| $x_2$ | $y_2$ | off | $t_3$ | $bbox_2$ |
| | | | | |
| | | | | |

Fig. 17

```
                        ┌─────────────┐
                        │    START    │
                        └──────┬──────┘
                               │
                               ▼
      ┌──────────────┬─────────────────────┐
      │              │      WAIT FOR        │─── S51
      │              │ REPRESENTATIVE EVENT │
      │              └──────────┬───────────┘
      │                         │        S52
      │                        ╱│╲
      │                      ╱  ▼  ╲        IN CASE WHERE THERE
      │                   ╱   CHECK   ╲      IS NOT RELATED EVENT
      │                 ◇   TRACKING   ◇────────────────────┐
      │                   ╲    LIST   ╱                     │
      │                      ╲     ╱                        │
      │         IN CASE WHERE ╲ ╱                           │
      │          THERE IS      │                            │
      │         RELATED EVENT  ▼                            │
      │           ┌────────────────────────┐               │
      │           │ CALCULATE DIFFERENCE Δt │               │
      │           │ BETWEEN TIME STAMPS OF  │─── S54        │
      │           │     RELATED EVENTS      │               │
      │           └───────────┬────────────┘               │
      │                       ▼                             │
      │           ┌────────────────────────┐               │
      │           │      DECODE DATA        │─── S55        │
      │           │      BASED ON Δt        │               │
      │           └───────────┬────────────┘               │
      │                       ▼                             ▼       S53
      │           ┌────────────────────┐   ┌────────────────────────┐
      │           │      UPDATE         │   │   ADD TO TRACKING      │
      │           │   TRACKING LIST     │─S56│        LIST           │
      │           └───────────┬────────┘   └───────────┬────────────┘
      │                       │                         │
      └───────────────────────┴─────────────────────────┘
                               ▼
```

Fig. 18

| POSITION | | POLARITY | TIME STAMP | BIT COUNTER | DECODED DATA |
|---|---|---|---|---|---|
| $x_1$ | $y_1$ | on | $t_1$ | $C_1$ | $D_1$ |
| $x_2$ | $y_2$ | off | $t_2$ | $C_2$ | $D_2$ |
| | | | | | |
| | | | | | |

Fig. 19

START

PERFORM BIT DETERMINATION
BASED ON $\Delta t$
$b$ = DETERMINED BIT —— S61

S62

CHECK DETERMINED
BIT $b$

IN CASE WHERE
BIT $b$ IS Start bit

S63

$C_i = 0$

IN CASE WHERE
BIT $b$ IS 0 OR 1

IN CASE WHERE BIT
COUNTER $C_i$ IS 0 TO $N-1$

CHECK BIT
COUNTER $C_i$

S64 IN CASE WHERE BIT
COUNTER $C_i$ IS $-1$

S65

$C_i = C_i+1$ FOR
ASSIGNING $b$ TO $C_i$th
BIT OF $D_i$ DECODED
DATA

IN CASE WHERE BIT
COUNTER $C_i$ IS EQUAL TO $N$

S66

CHECK Parity
ERROR INSPECTION

IN CASE WHERE
ERROR IS DETECTED

IN CASE WHERE
THERE IS NO ERROR

S67

OUTPUT DECODED DATA $D_i$

S68

$C_i = -1, D_i = 0$

END

Fig. 20

Fig. 21

| Start of Frame (SOF) | Payload | End of Frame (EOF) |
|---|---|---|
| Start (1 bit OR MORE) | Data (1 bits ~ N bits) | Parity (1 bit OR MORE) |

Fig. 22

| POSITION | | DECODED DATA | TIME STAMP |
|---|---|---|---|
| $x_i$ | $y_i$ | $D_i = b_1 b_2 \sim b_N$ | $t_i$ |
| $x_{i+1}$ | $y_{i+1}$ | $D_{i+1} = b_1 b_2 \sim b_N$ | $t_{i+1}$ |
| | | | |

Fig. 23

START

WAIT FOR EVENT ⟵ S11

$e_{j+1} = (x_{j+1}, y_{j+1}, p_{j+1}, t_{j+1})$ ⟵ S12

$(x_i, y_i, p_i, t_i) \Leftarrow FIFO[TAIL]$ ⟵ S80

S14

$t_i < t_{j+1} - \tau$

YES      NO

S18

EXTRACT
REPRESENTATIVE EVENT

S82     YES

$Spatial[x_{j+1}, y_{j+1}] \neq 0$

NO

S81

$Spatial[x_i, y_i] = 0$

S83

$FIFO.pushRight(x_{j+1}, y_{j+1}, t_{j+1})$

$FIFO.popLeft()$ ⟵ S20

S84

$Spatial[x_{j+1}, y_{j+1}] = p_{j+1}$

Fig. 24

| POSITION | | POLARITY |
|---|---|---|
| $x_1$ | $y_1$ | on |
| $x_2$ | $y_2$ | off |
| $x_3$ | $y_3$ | on |
| | | |

Fig. 25

Fig. 26

| POSITION | | TIME STAMP |
|---|---|---|
| $x_1$ | $y_1$ | $t_1$ |
| $x_2$ | $y_2$ | $t_3$ |
| $x_3$ | $y_3$ | $t_5$ |
| | | |

Fig. 27

EP 4 561 085 A1

Fig. 28

| POSITION | | DATA | TIME STAMP |
|---|---|---|---|
| $x_1$ | $y_1$ | $ID_1$ | $t_1$ |
| $x_2$ | $y_2$ | $ID_2$ | $t_2$ |
| $x_3$ | $y_3$ | $ID_3$ | $t_3$ |
| $x_4$ | $y_4$ | $ID_4$ | $t_4$ |

Fig. 29

| ID | COORDINATES | | |
|----|----|----|----|
| $ID_1$ | $X_1$ | $Y_1$ | $Z_1$ |
| $ID_2$ | $X_2$ | $Y_2$ | $Z_2$ |
| $ID_3$ | $X_3$ | $Y_3$ | $Z_3$ |
| $ID_4$ | $X_4$ | $Y_4$ | $Z_4$ |

Fig. 30

| POSITION | | DATA | TIME STAMP |
|---|---|---|---|
| $x_1$ | $y_1$ | $X_1, Y_1, Z_1$ | $t_1$ |
| $x_2$ | $y_2$ | $X_2, Y_2, Z_2$ | $t_2$ |
| $x_3$ | $y_3$ | $X_3, Y_3, Z_3$ | $t_3$ |
| $x_4$ | $y_4$ | $X_4, Y_4, Z_4$ | $t_4$ |

Fig. 31

Fig. 32

Fig. 33

EP 4 561 085 A1

EXTERNAL ENVIRONMENT
SERVER    VEHICLE    TERMINAL    INFRASTRUCTURE    ~7750

~7000

7600
~7620 GENERAL-PURPOSE COMMUNICATION I/F
~7630 DEDICATED COMMUNICATION I/F
~7640 POSITIONING UNIT
~7660 IN-VEHICLE DEVICE I/F

~7760 IN-VEHICLE DEVICE

7800 INPUT UNIT

7610 MICROCOMPUTER

~7670 AUDIO/IMAGE OUTPUT UNIT

~7710 AUDIO SPEAKER

~7720 DISPLAY UNIT

INTEGRATED CONTROL UNIT

~7690 STORAGE UNIT

~7680 IN-VEHICLE NETWORK I/F

~7650 BEACON RECEPTION UNIT

~7730 INSTRUMENT PANEL

7010

COMMUNICATION NETWORK

~7100 DRIVE SYSTEM CONTROL UNIT
~7200 BODY SYSTEM CONTROL UNIT
~7300 BATTERY CONTROL UNIT
~7400 VEHICLE EXTERIOR INFORMATION DETECTION UNIT
~7500 VEHICLE INTERIOR INFORMATION DETECTION UNIT

~7110 VEHICLE STATE DETECTION UNIT
~7310 SECONDARY BATTERY
~7410 IMAGING UNIT
~7420 VEHICLE EXTERIOR INFORMATION DETECTOR
~7510 DRIVER STATE DETECTION UNIT

Fig. 34

## INTERNATIONAL SEARCH REPORT

International application No.

**PCT/JP2023/025225**

| A. | CLASSIFICATION OF SUBJECT MATTER |
|---|---|

*H04N 23/60*(2023.01)i; *H04B 10/67*(2013.01)i; *H04N 25/707*(2023.01)i
FI:　H04N23/60 500; H04B10/67; H04N25/707

According to International Patent Classification (IPC) or to both national classification and IPC

| B. | FIELDS SEARCHED |
|---|---|

Minimum documentation searched (classification system followed by classification symbols)

　　H04N23/60; H04B10/67

Documentation searched other than minimum documentation to the extent that such documents are included in the fields searched

　　Published examined utility model applications of Japan 1922-1996
　　Published unexamined utility model applications of Japan 1971-2023
　　Registered utility model specifications of Japan 1996-2023
　　Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | US 2022/0038182 A1 (RAYTHEON BBN TECHNOLOGLES, CORP.) 03 February 2022 (2022-02-03)<br>　　paragraphs [0012]-[0036], fig. 1-5 | 1-20 |
| Y | JP 2010-212920 A (PANASONIC CORP) 24 September 2010 (2010-09-24)<br>　　paragraphs [0035]-[0037], fig. 3-4 | 1-20 |
| Y | JP 2001-244948 A (CASIO COMPUTER CO LTD) 07 September 2001 (2001-09-07)<br>　　paragraph [0032] | 1-20 |
| A | WO 2018/198646 A1 (SONY CORP) 01 November 2018 (2018-11-01)<br>　　entire text, all drawings | 1-20 |
| P, A | WO 2022/254789 A1 (SONY GROUP CORP) 08 December 2022 (2022-12-08)<br>　　entire text, all drawings | 1-20 |

☐ Further documents are listed in the continuation of Box C.　　☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **30 August 2023** | **12 September 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

| International application No. |
|---|
| **PCT/JP2023/025225** |

| Patent document cited in search report | | | Publication date (day/month/year) | Patent family member(s) | | | Publication date (day/month/year) |
|---|---|---|---|---|---|---|---|
| US | 2022/0038182 | A1 | 03 February 2022 | JP 2023-530200 A paragraphs [0004]-[0028], fig. 1-5 WO 2022/026051 A1 | | | |
| JP | 2010-212920 | A | 24 September 2010 | (Family: none) | | | |
| JP | 2001-244948 | A | 07 September 2001 | (Family: none) | | | |
| WO | 2018/198646 | A1 | 01 November 2018 | US 2020/0096760 A1 entire text, all drawings | | | |
| WO | 2022/254789 | A1 | 08 December 2022 | (Family: none) | | | |

Form PCT/ISA/210 (patent family annex) (January 2015)

## EP 4 561 085 A1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021513235 W